# EUROPEAN PATENT SPECIFICATION

(11) **EP 4 361 909 B1**
(45) Date of publication and mention of the grant of the patent: **07.05.2025**
(21) Application number: 23205388.4
(22) Date of filing: 24.10.2023
(51) Int. Cl.: G06Q 10/0633, G06Q 10/0631, G06F 11/34

(54) **METHOD AND SYSTEM FOR TASK RECORDING USING ROBOTIC PROCESS AUTOMATION TECHCHNOLOGY**
VERFAHREN UND SYSTEM ZUR AUFGABENAUFZEICHNUNG MITTELS ROBOTERTECHNIK DER PROZESSAUTOMATISIERUNG
PROCÉDÉ ET SYSTÈME D'ENREGISTREMENT DE TÂCHES UTILISANT LA TECHNIQUE D'AUTOMATISATION DE PROCESSUS ROBOTIQUE

(30) Priority: 26.10.2022 KR 20220139060; 10.01.2023 KR 20230003687
(43) Date of publication of application: 01.05.2024
(73) Proprietor: Samsung SDS Co., Ltd., Songpa-gu, Seoul (KR)
(72) Inventor: Kim, Hyo Young, SEOUL (KR); Lee, Jae Cheol, SEOUL (KR)
(74) Representative: Glawe, Delfs, Moll

(56) References cited:
- EP-A1- 3 910 468
- CN-A- 115 061 679
- US-A1- 2021 191 367

## Description

### BACKGROUND

### 1. Field

The present disclosure relates to Robotics Process Automation (RPA) technology. More specifically, it relates to a method for increasing an accuracy of task recording performed by RPA technology and a computing system to which the method is applied.

### 2. Description of the Related Art

Robotic Process Automation (RPA), a technology that automates tasks repeatedly performed by users, is one of the IT (Information Technology) that has recently received great attention. US 2021/0191367 A1 discloses a system and a computer-implemented method for analyzing a robotic process automation (RPA) workflow. Through RPA technology, a series of actions that were repeated by people can be automated and unmanned. The series of actions is also referred to as a task.

Meanwhile, tasks to be automated by RPA technology can be defined directly through an RPA editing tool, or can be defined by the user directly performing a series of actions and the process being recorded. The data on which the above task is defined is also referred to as an RPA scenario. Task recording using RPA technology is lowering accessibility to the technology so that even users without programming skills can automate tasks through RPA technology. However, the current RPA task recording is insufficient in terms of accuracy to be applied as is.

### SUMMARY

The technical problem to be solved in some embodiments of the present disclosure is to provide an RPA recording method that increases the accuracy of the RPA recording result by post-processing the RPA recording result and a computing system to which the method is applied. The invention is defined in the appended claims.

Another technical problem to be solved in some embodiments of the present disclosure is to provide an RPA recording method that increases the versatility of the RPA scenario generated as a result of RPA recording by detecting a sequence of user manipulations extracted as a result of RPA recording that corresponds to a standardized user interface component manipulation, and according to the detection results, defining the RPA scenario generated as a result of RPA recording not only as basic types of user manipulation such as keyboard manipulation or mouse manipulation, but also in the form of standardized user interface component manipulation, and a computing system to which the method is applied.

The technical objects of the present disclosure are not limited to the technical objects mentioned above, and other technical objects not mentioned may be clearly understood by those skilled in the art from the description below.

According to an aspect of the present disclosure, there is provided a method for recording a task based on robotic process automation (RPA) performed by a computing system in which RPA solution is installed. The method includes: recording a task using the RPA solution; and performing, in response to completion of the recording, recording result correction, wherein the performing the recording result correction includes: sequentially obtaining each event included in an event sequence generated as a result of the recording, wherein the event sequence includes information about each event included in the event sequence, and the information about each event includes information about a type of user manipulation, information about a target object position, and information about a target object type; correcting the target object type of the obtained event using the target object position of the obtained event; wherein the correcting the target object type comprises: calling an object type return method that receives a target object position of the obtained event; waiting until the object type return method returns; and correcting the target object type of the obtained event to an object type returned from the object type return method; reproducing the obtained event using the target object position of the obtained event and a corrected target object type of the obtained event; and repeating the obtaining, the correcting, and the reproducing until an event included in the event sequence is exhausted.

**In** some embodiments, the information about each event may further include information about event holding time, which is interval between an occurrence time of the event and an occurrence time of an event immediately after the event, wherein the performing the recording result correction may include: determining whether the event holding time of all events included in the event sequence exceeds a first reference value; and performing, when it is determined as a result of the determination that the event holding time of at least some events is less than the first reference value, the recording result correction.

**In** some embodiments, the information about each event may further include information about event holding time, which is interval between an occurrence time of the event and an occurrence time of an event immediately after the event, wherein the performing the recording result correction may include: determining whether the event holding time of each event included in the event sequence exceeds a second reference value; and performing the recording result correction only for an event, in which the event holding time is determined to be less than a second reference value.

**In** some embodiments, the information about each event may further include information about event holding time, which is interval between an occurrence time of the event and an occurrence time of an event immediately after the event, wherein the performing the recording result correction may include: calculating a representative value of the event holding time of all events included in the event sequence; and performing, when it is determined that the representative value of the event holding time is less than a third reference value, the recording result correction.

The correcting the target object type includes: calling an object type return method that receives a target object position of the obtained event; waiting until the object type return method returns; and correcting the target object type of the obtained event to an object type returned from the object type return method.

In some embodiments, a target object type of each event included in the event sequence may be obtained as a result of calling a first method, wherein the correcting the target object type may include: calling a second method that receives a target object position of the obtained event; and correcting the target object type of the obtained event to an object type returned from the second method, wherein the first method and the second method are different from each other.

In some embodiments, the first method may be executed by a second process that is different from a first process of the RPA solution by an inter-process communication method, wherein the second method may be executed by the first process or a third process.

In some embodiments, the correcting the target object type may include: determining a type of an object displayed at the target object position of the obtained event on a display screen output by an operating system installed in the computing system using an object type classification model; and correcting the target object type of the obtained event to the determined type.

In some embodiments, method of claim 1, wherein the performing the recording result correction may include: automatically performing, in response to completion of the recording, the recording result correction without a separate user command, and the method may further include: storing final result data of the task recording generated using a corrected event sequence obtained according to the recording result correction.

In some embodiments, the storing the final result data may include: configuring a noise-removed event sequence by removing a noise event that is part of a plurality of events included in the corrected event sequence; replacing a partial event sequence included in the noise-removed event sequence with an activity, wherein the partial event sequence includes a plurality of consecutive events; and storing the noise-removed event sequence reflecting a result of the replacing as the final result data.

In some embodiments, the storing the noise-removed event sequence reflecting the result of the replacing as the final result data may include: displaying an event sequence generated as a result of the recording and the noise-removed event sequence reflecting the result of the replacing on one screen, and displaying a comparison screen including a user interface for user manual adjustment of an event.

In some embodiments, the storing the noise-removed event sequence reflecting the result of the replacing as the final result data may include: displaying the corrected event sequence and the noise-removed event sequence reflecting the result of the replacing on one screen, and displaying a comparison screen including a user interface for user manual adjustment of an event.

In some embodiments, the recording may include: hooking a user's pointing device manipulation information and intercepting coordinates of a cursor using a callback function according to the hooking; intercepting button input information of the pointing device using a callback function according to the hooking; determining whether the button input information satisfies an event salience requirement; configuring, in response to determining that the button input information satisfies the event salience requirement, event information by setting the button input information to information about the type of user manipulation, setting the coordinates of the cursor to information about the target object position, calling a first method using the information about the target object position and setting a target object type returned from the first method; and adding information of the configured event to the event sequence.

According to another aspect of the present disclosure, there is provided a method for recording a task based on robotic process automation (RPA) performed by a computing system in which RPA solution is installed. The method may include: recording a task using the RPA solution; and performing, in response to completion of the recording, noise event removal, wherein the performing the noise event removal may include: sequentially obtaining each event included in an event sequence generated as a result of the recording, wherein the event sequence includes information about each event included in the event sequence, and the information about each event includes information about a type of user manipulation and application identification information of an application including a target object; and removing a noise event that is part of a plurality of events included in the event sequence, by using application identification information of each event included in the event sequence.

In some embodiments, the removing the noise event may include: extracting a noise candidate sequence using the application identification information of each event included in the event sequence, wherein the noise candidate sequence includes at least three or more consecutive events; querying the noise candidate sequence from a plurality of previously stored task recording final result data; finally determining whether the noise candidate sequence is noise using a result of the querying; and removing, when the noise candidate sequence is finally determined to be noise, the noise candidate sequence from the event sequence.

In some embodiments, the finally determining whether the noise candidate sequence is noise may include: finally determining that, when a partial sequence identical to the noise candidate sequence is not found in the plurality of previously stored task recording final result data, the noise candidate sequence is noise.

In some embodiments, the extracting the noise candidate sequence may include: extracting a noise candidate sequence, in which a first event, a second event, and a third event are sequentially directly connected, wherein application identification information of the first event and application identification information of the second event are different from each other, and the application identification information of the second event and application identification information of the third event are different from each other.

In some embodiments, the extracting the noise candidate sequence may include: extracting a noise candidate sequence, in which a first event, one or more second events, and a third event are sequentially directly connected, wherein application identification information of the one or more second events is identification information of a low-frequency application selected based on a frequency of inclusion in the event sequence.

According to yet another aspect of the present disclosure, there is provided a method for recording a task based on robotic process automation (RPA) performed by a computing system in which RPA solution is installed. The method may include: recording a task using the RPA solution; sequentially obtaining each event included in the event sequence generated as a result of the recording, wherein the event sequence includes information about each event included in the event sequence, and the information about each event includes information about a type of user manipulation and information about a target object type; and replacing a partial event sequence included in the event sequence with an activity, wherein the partial event sequence includes a plurality of consecutive events satisfying a predefined pattern.

In some embodiments, the replacing the partial event sequence with the activity may include: a first step of obtaining a pattern table corresponding to the predefined pattern, wherein the pattern table sequentially defines a requirement of a plurality of events corresponding to each pattern; a second step of determining whether information of the first event satisfies the requirement of the first event corresponding to a first pattern in the pattern table; a third step of writing, if it is determined that the information of the first event satisfies the requirement of the first event corresponding to the first pattern, an immediately preceding activity information for a second event, which is an event immediately after the first event, as a first event of the first pattern, and initializing, if it is determined that the information of the first event does not satisfy the requirement of the first event corresponding to the first pattern, an immediately preceding activity information for the second event; and a fourth step of repeating, if the immediately preceding activity information for the second event is initialized, the second and third steps, and determining, if the immediately preceding activity information for the second event is written as the first event of the first pattern, whether the information of the second event satisfies a requirement of the second event corresponding to the first pattern.

According to another aspect of the present disclosure, there is provided a system for recording a task based on robotic process automation (RPA), the system comprising: one or more processors; and a memory configured to store one or more instructions, wherein the one or more processors, by executing the stored one or more instructions, perform: recording a task using the RPA solution; and performing, in response to completion of the recording, recording result correction, wherein the performing the recording result correction comprises: sequentially obtaining each event included in an event sequence generated as a result of the recording, wherein the event sequence comprises information about each event included in the event sequence, and the information about each event comprises information about a type of user manipulation, information about a target object position, and information about a target object type; correcting the target object type of the obtained event using the target object position of the obtained event; wherein the correcting the target object type includes: calling an object type return method that receives a target object position of the obtained event; waiting until the object type return method returns; and correcting the target object type of the obtained event to an object type returned from the object type return method; reproducing the obtained event using the target object position of the obtained event and a corrected target object type of the obtained event; and repeating the obtaining, the correcting, and the reproducing until an event included in the event sequence is exhausted.

According to another aspect of the present disclosure, there is provided a non-transitory computer-readable recording medium storing a computer program, which, when executed by one or more processors, causes the one or more processors to perform: recording a task using the RPA solution; and performing, in response to completion of the recording, recording result correction, wherein the performing the recording result correction comprises: sequentially obtaining each event included in an event sequence generated as a result of the recording, wherein the event sequence comprises information about each event included in the event sequence, and the information about each event comprises information about a type of user manipulation, information about a target object position, and information about a target object type; correcting the target object type of the obtained event using the target object position of the obtained event; wherein the correcting the target object type includes: calling an object type return method that receives a target object position of the obtained event; waiting until the object type return method returns; and correcting the target object type of the obtained event to an object type returned from the object type return method; reproducing the obtained event using the target object position of the obtained event and a corrected target object type of the obtained event; and repeating the obtaining, the correcting, and the reproducing until an event included in the event sequence is exhausted.

### BRIEF DESCRIPTION OF THE DRAWINGS

These and/or other aspects will become apparent and more readily appreciated from the following description of the embodiments, taken in conjunction with the accompanying drawings in which:
FIG. 1 is a configuration diagram of an RPA system according to an embodiment of the present disclosure;
FIG. 2 is a configuration diagram of a task recording device according to another embodiment of the present disclosure
FIGS. 3 to 5 are flowcharts of RPA task recording methods according to further embodiments of the present disclosure;
FIG. 6 is a diagram illustrating an example event sequence resulting from task recording that is corrected in some embodiments of the present disclosure;
FIGS. 7 and 8 are diagrams for explaining how a target object type is corrected among the results of task recording in some embodiments of the present disclosure;
FIGS. 9 to 11 are detailed flowcharts for describing in more detail some operations of the methods described with reference to FIGS. 3 to 5;
FIGS. 12 to 16B are diagrams for describing a process for removing a noise event from an event sequence resulting from task recording in some embodiments of the present disclosure;
FIG. 17 is a detailed flowchart for describing in more detail some operations of the methods described with reference to FIGS. 3 to 5;
FIG. 18 is a diagram illustrating an example pattern table referenced in the method described with reference to FIG. 17;
FIG. 19 is a diagram illustrating a process, in which a partial event sequence corresponding to an activity defined in the pattern table is replaced with an activity, with reference to the pattern table of FIG. 18;
FIG. 20 is a diagram showing an adjusted event sequence that is finally output from the example described with reference to FIGS. 18 and 19;
FIG. 21 is a diagram illustrating an example of a comparison screen that may be displayed on a user terminal in some embodiments of the present disclosure; and
FIG. 22 is a hardware configuration diagram of a computing system described in some embodiments of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will be defined by the appended claims and their equivalents.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that may be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), may be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Several terms mentioned in this disclosure are explained.

Task: Refers to a series of computer manipulations to be automated and unattended by RPA technology.

RPA scenario: Data that describes a task or a file that stores that data. For example, RPA scenarios may be written in the form of script files. Additionally, the RPA scenario may be created using a tool that creates the flow of the above series of actions, such as an RPA scenario editor. Additionally, the RPA scenario may be drafted using a recording tool and then post-processed according to some embodiments of the present disclosure to be finally completed. The RPA scenario may be an XML-based script, and, in which each action to be automatically executed may be hierarchically defined as a tag at a specific level. Additionally, since each action to be automatically executed may have an execution order, tags defining each action will be placed in the script of the RPA scenario according to its execution order.

RPA task recording: refers to the act of creating an event sequence to emerge as an RPA scenario by detecting the user inputting a series of computer manipulations to be automated and unattended using the task recording tool provided by the RPA solution. Here, the event sequence includes information about each event included in the event sequence, and the information about each event may include information about the type of user manipulation, information about the target object position, and information about the target object type.

Activity: Refers to the manipulation of a specific type of standardized user interface component. For example, an activity that selects a specific item of a list component, an activity that deletes all editor components and enters a specific text, etc. may be defined. An activity may be expressed as a pattern having an event sequence comprising two or more events, and the pattern of each activity may be stored through a data structure such as a pattern table.

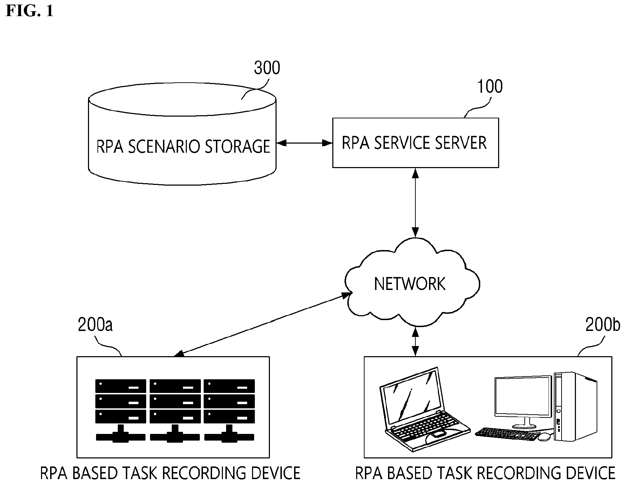

An RPA system according to an embodiment of the present disclosure will be described with reference to FIG. 1. The RPA system according to this embodiment may comprise one or more computing systems to which RPA technology is applied for automation of repetitive tasks. As shown in FIG. 1, the RPA system according to this embodiment may comprise task recording devices 200a and 200b that perform RPA task recording, RPA scenario storage 300, and RPA service server 100.

The task recording devices 200a and 200b may be divided into a host server type task recording device 200a and a user terminal type task recording device 200b.

The task recording device 200a in the form of a host server may be understood as a device that provides a remote desktop to which a user is granted access, or a device that provides physical resources of a virtual machine to which a user is granted access. The user will execute RPA task recording by manipulating the host server type task recording device 200a through manipulation of a separate terminal (not shown) connected to the network.

The user may perform RPA-based task recording by directly inputting a user manipulation to the task recording device 200b in the form of a terminal device.

The RPA scenario storage 300 may store the RPA scenario generated by the task recording devices 200a and 200b. In FIG. 1, the RPA scenario storage 300 is shown as a server-side device connected to the RPA service server 100, but the RPA service server 100 and the RPA scenario storage 300 may be integrated and configured, and the RPA scenario storage 300 may be provided in the task recording devices 200a and 200b.

The RPA service server 100 transmits and receives data with the RPA solution installed in the task recording devices 200a and 200b, thereby updating the RPA engine for execution of the RPA scenario or, in response to a request from the task recording devices 200a and 200b, providing the task recording device 200a, 200b with a query page of the RPA scenario that may be accessed by the user of the task recording device 200a, 200b, or storing RPA scenario data or the RPA scenario file provided from the task recording device 200a, 200b in the RPA scenario storage 300, or providing a console page for use of the RPA solution to the task recording devices 200a and 200b.

As described above, the task recording devices 200a and 200b are computing devices with an RPA solution installed. The task recording devices 200a and 200b may record a task using the RPA solution and perform correction of the recording result in response to completion of the recording. The recording result correction may be performed under user confirmation input, or may be performed automatically without user confirmation input.

Performing the recording result correction comprises sequentially obtaining each event included in an event sequence generated as a result of the recording, wherein the event sequence includes information about each event included in the event sequence, and the information about each event includes information about the type of user manipulation, information about the target object position, and information about the target object type, and correcting a target object type of the obtained event by using the target object position of the obtained event, reproducing the obtained event using the target object position of the obtained event and the corrected target object type of the obtained event, and repeating the obtaining, the correcting, and the reproducing until the events included in the event sequence are exhausted.

Correction of the recording result will be explained in more detail through other embodiments to be described later.

In some embodiments, the task recording devices 200a and 200b may perform additional post-processing on the event sequence generated as a result of the recording even after correcting the recording result.

For example, the task recording devices 200a and 200b may remove a noise event that is part of a plurality of events included in the event sequence using application identification information of each event included in the event sequence.

Additionally, for example, the task recording devices 200a and 200b may replace a partial event sequence included in the event sequence with a predefined activity. At this time, the partial event sequence comprises a plurality of consecutive events that satisfy a predefined pattern.

In addition, for example, the task recording devices 200a and 200b may also reflect the user's manual cancellation for some of the corrections through a comparison screen of the original event sequence generated as a result of the recording and the corrected event sequence according to the post-processing.

As described above, the task recording devices 200a and 200b may improve the accuracy of the RPA recording results by performing various types of post-processing on the event sequence generated as a result of the recording. In addition, by the above post-processing, the results of RPA recording will be defined in the form of basic types of standardized user interface component manipulation such as keyboard manipulation or mouse manipulation, so the RPA scenario created as a result of RPA recording will operate correctly for a general-purpose user interface.

The exemplary user interface component is a standardized user interface component provided by a general-purpose operating system and may include, for example, an edit component, list box component, or menu component provided by the Microsoft Windows operating system.

Additionally, the standardized user interface component may be capable of directly applying manipulation input by calling an API (Application Programming Interface) from the outside. In this sense, the user interface component included in Microsoft Office that provides an API for external control may also be an example of the standardized user interface component.

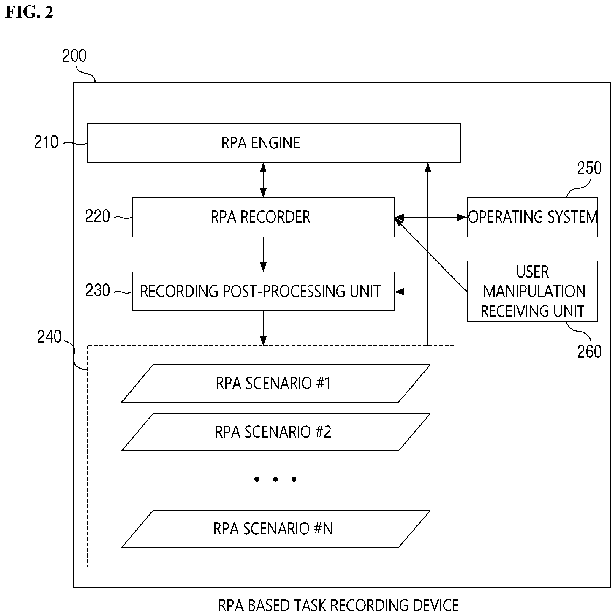

Hereinafter, the logical configuration of the task recording device 200 will be described with reference to FIG. 2. As shown in FIG. 2, the task recording device 200 comprises an RPA engine 210 capable of executing an RPA scenario 240, an RPA recorder 220 that performs RPA task recording, and recording post-processing unit 230 that performs post-processing for an event sequence generated by the RPA recorder.

The RPA recorder 220 may receive data on user manipulation (action) input from the user manipulation (action) receiving unit 260 during recording. Alternatively, the RPA recorder 220 may obtain data on user manipulation input from the user by monitoring user manipulation or hooking a user manipulation event targeting the user manipulation (action) receiving unit 260 during recording.

Additionally, the RPA recorder 220 may receive information about the type of object that is the target of user manipulation (action) from the operating system 250 during recording.

The recording post-processing unit 230 performs the above-described post-processing on the event sequence generated by the RPA recorder 220, and may control the RPA recorder to create an RPA scenario corresponding to the corrected event sequence according to the post-processing.

As described above, the configuration and operation of the RPA system and task recording device according to embodiments of the present disclosure have been described. In the interpretation of the configuration or operation of the RPA system and the task recording device described above, the technical ideas of various embodiments described later may be reflected.

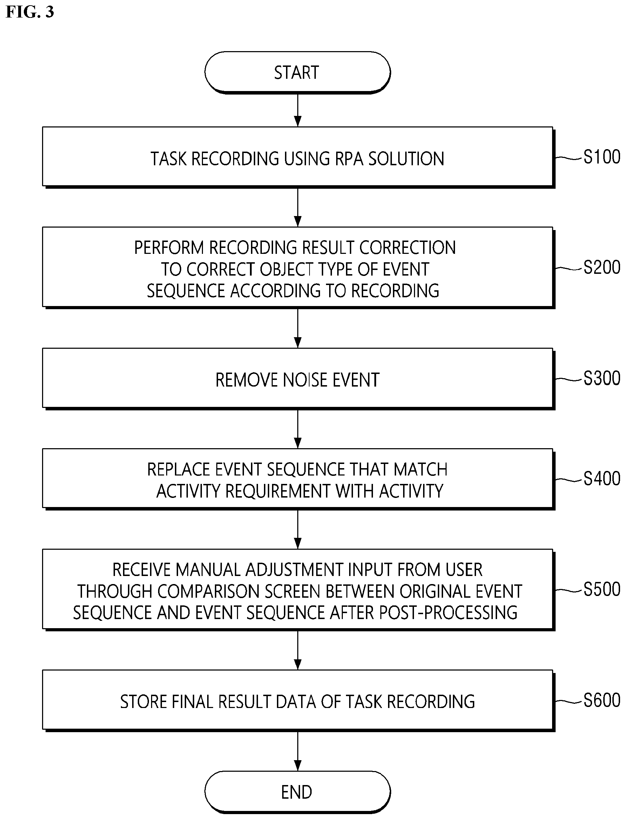

Next, an RPA-based task recording method according to another embodiment of the present disclosure will be described with reference to FIGS. 3 to 21. Hereinafter, the RPA-based task recording method according to this embodiment will be abbreviated as 'task recording method,' and the task recording device mentioned in this embodiment will be abbreviated as 'task recording device.'

The RPA-based task recording method according to this embodiment may be performed by one or more computing devices. That is, in the RPA-based task recording method according to this embodiment, all operations may be performed by one computing device, or some operations may be performed by another computing device. Additionally, as the server system is implemented on a cloud computing node, operations performed by one server system may also be performed separately on a plurality of cloud computing nodes. Additionally, technical ideas that may be recognized with reference to the description of the RPA system and task recording device described above may be applied to the task recording method according to this embodiment even if not separately specified in this embodiment. Hereinafter, the subject of execution of each operation may be omitted. In this case, the subject of execution of the operation may be, for example, the task recording device described with reference to FIGS. 1 and 2.

First, the task recording method according to this embodiment will be described with reference to FIG. 3.

After the task recording device performs task recording using the RPA solution (S100), it performs recording result correction to correct the object type of the event sequence generated as a result of task recording (S200).

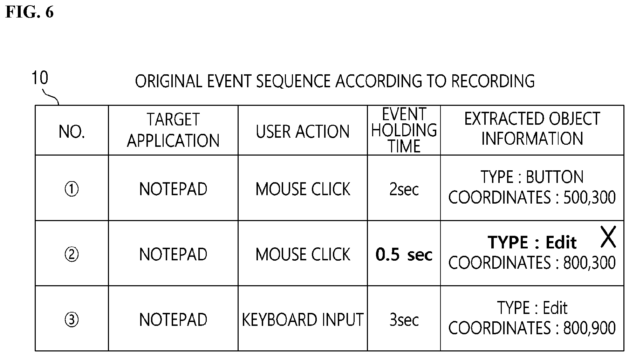

Correction of the recording result will be described in detail later with reference to FIGS. 6 to 10. Roughly speaking, correction of the recording result may be understood as identifying the exact type of the target object that was the target of the event by reproducing each event included in the event sequence and correcting the event sequence using the result of the identification.

The task recording device may automatically perform recording result correction in response to task recording being completed (S200). As will be described later, recording result correction is intended to correct the type of the target object of the event, which has been incorrectly identified. In order to correct the type of the incorrectly identified target object, recording result correction is automatically performed without separate user confirmation. By doing so, unnecessary manipulations by users may be reduced.

The task recording device may perform recording result correction (S200) only when there is a user confirmation input in response to task recording being completed, and depending on the results of the evaluation of the task recording, the recording result correction may be performed in whole or in part of the event sequence.

As described above, the recording result correction is to identify the exact type of the target object that was the target of the event by reproducing each event included in the event sequence. In order to reproduce the task recording situation identically, there should be no change in the position of the object in the screen. Taking this into consideration, the task recording device may check whether there has been a change in the position of the object on the screen during task recording and perform the recording result correction only if there has been no change in the position of the object on the screen during task recording.

The task recording device generates a first snapshot of the screen at the start of task recording and generates a second snapshot of the screen at the end of task recording, in order to check whether the position of the object in the screen has changed during task recording. By comparing the first snapshot and the second snapshot, it will be possible to determine whether the position of the object in the screen has changed during task recording.

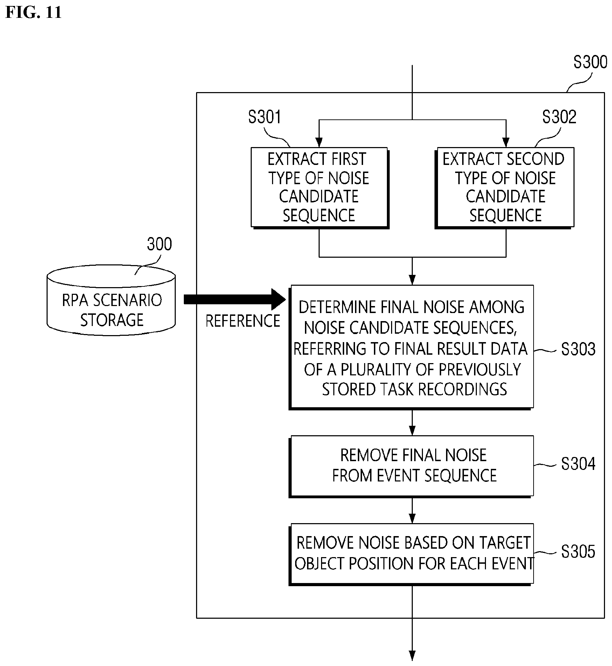

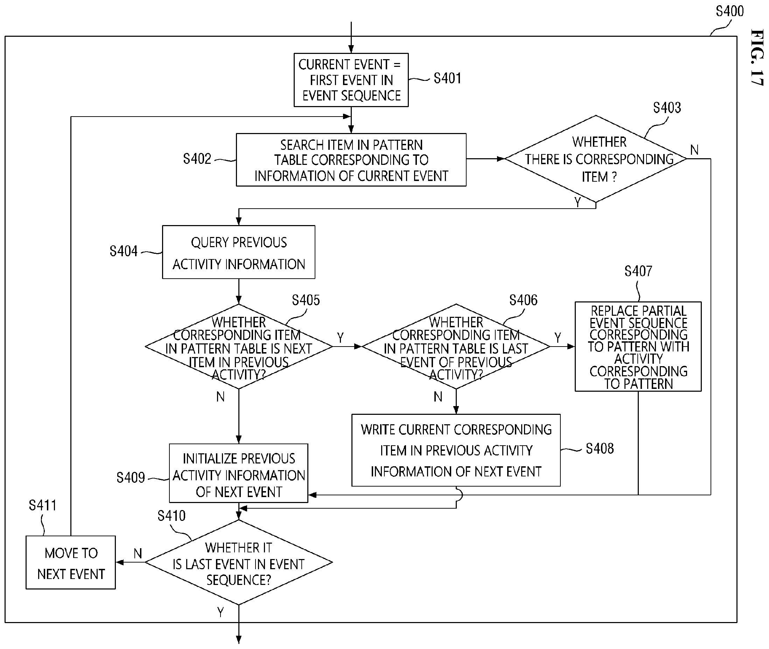

The task recording device may complete the post-processing procedure only by the recording result correction (S200), but may also perform one or more additional post-processing processes. For example, the task recording device may configure a noise-removed event sequence (S300) by removing a noise event that is part of a plurality of events included in the event sequence corrected by recording result correction (S200), or replace the partial event sequence included in the noise-removed event sequence with an activity (S400). Removal of the noise event (S300) will be described in detail later with reference to FIGS. 11 to 16B. Additionally, replacement with activity (S400) will be described in detail later with reference to FIGS. 17 to 20.

Next, the task recording device may provide the user with a comparison screen between the original event sequence generated as a result of task recording and the event sequence after post-processing (S500). The comparison screen may display a user interface that allows the user to manually cancel the reflection of each correction item according to the post-processing.

In some embodiments, the comparison screen may display a comparison result between the event sequence after correction of the recording result has been performed and the event sequence after post-processing. As described above, since correction of the recording result is intended to correct the result of clearly incorrect object type identification, it may be desirable to display the event sequence after correction of the recording result is performed instead of the original event sequence.

Next, the task recording device may generate and store the final result data of task recording in which all corrections according to the post-processing, excluding those manually canceled by the user, are reflected (S600).

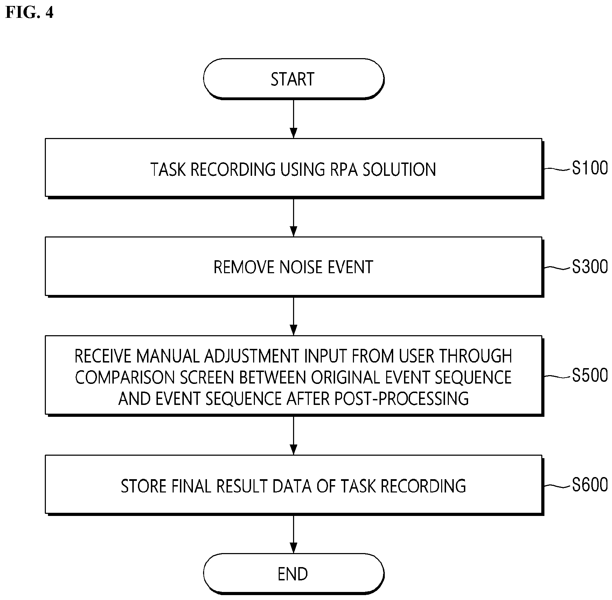

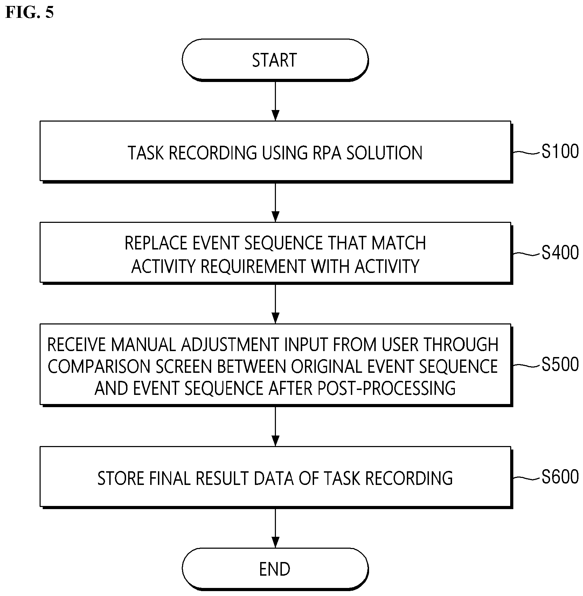

In some embodiments, the task recording device may perform only some of the post-processing operations described with reference to FIG. 3. For example, as shown in FIG. 4, the task recording device may only remove noise events (S300) and perform manual adjustment by the user (S500) without the recording result correction (S200). In addition, as shown in FIG. 5, the task recording device may only replace with the event sequence with an activity that meets the activity requirements (S400) and perform manual adjustment by the user (S500) without the recording result correction (S200).

Correction of incorrect target object types according to recording result

Hereinafter, operations related to correction of recording results will be described in detail with reference to FIGS. 6 to 10. The task recording device may generate an event sequence 10 as shown in FIG. 6 as a result of task recording by the RPA solution. The event sequence 10 may include information about each event included in the event sequence 10, and the information about each event includes information about the type of user manipulation (action), information about the target object position, and information about the target object type.

Additionally, in some embodiments, as shown in FIG. 6, information about each event may further include information about the event holding time.

In some embodiments, the event holding time for a first event may be calculated by subtracting the occurrence time of the first event from the occurrence time of the second event immediately after the first event.

In some other embodiments, the event holding time for a first event may be calculated by subtracting the occurrence time of the user manipulation constituting the first event from the occurrence time of another user manipulation after the user manipulation constituting the first event. For example, another user manipulation after the user manipulation constituting the first event may be a mouse movement. The movement of the mouse is not a user manipulation that constitutes an event, but it may be a reference for calculating the event holding time. For example, the event holding time of an event generated by a mouse click may be calculated by subtracting the occurrence time of the mouse click from the occurrence time of the mouse movement after the mouse click. Considering that some of the user manipulations constituting events, the method of calculating the event holding time according to the present embodiment calculates the event holding time shorter than the method of calculating the event holding time according to the embodiment described just before. The event holding time is a reference value for determining whether or not recording result correction is performed in the recording result correction operation to be described later. The shorter the event holding time, the higher the possibility that the recording result correction operation will be performed. Therefore, by calculating the event holding time using the calculation method according to the present embodiment, the recording result correction operation will be performed on a wider variety of task recording results compared to the calculation method of the event holding time according to the embodiment just described.

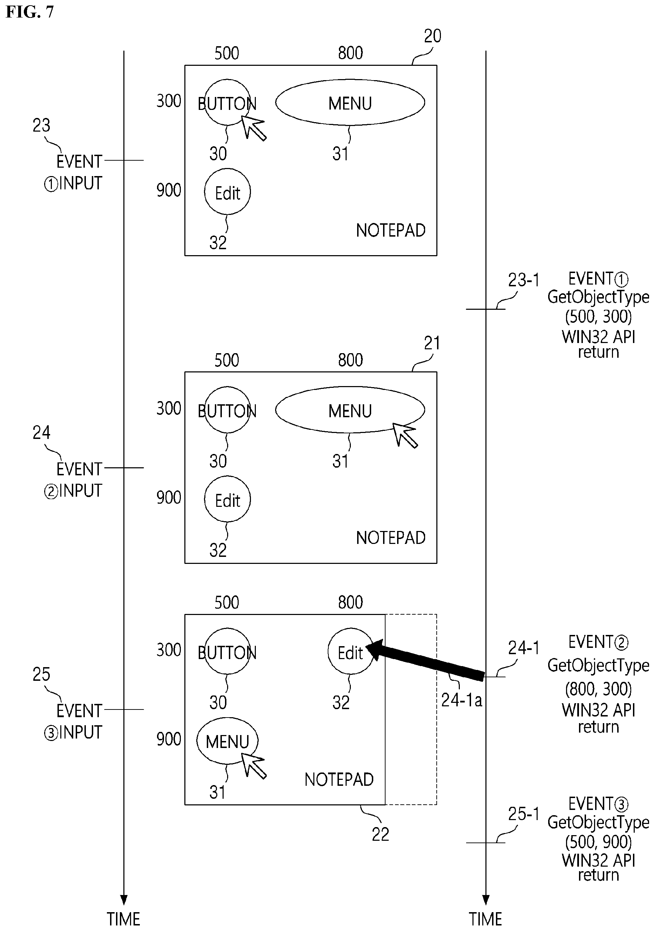

However, in some events input at a high manipulation speed during task recording, the type of the target object of the event may be incorrectly identified. For example, FIG. 6 shows that the target object type of the second event, a mouse click manipulation on a notepad, was incorrectly identified as edit. The reason will be explained with reference to FIG. 7.

The user may input event 1 (23) of clicking the button object 30 displayed on the screen 20. The task recording device may hook the user's pointing device manipulation information or keyboard manipulation information to detect keyboard manipulation and mouse manipulation, and use a callback function according to the hooking to intercept the coordinates of the cursor or key input information. Additionally, the task recording device may intercept button input information of the pointing device using a callback function according to the hooking.

The task recording device may determine whether the button input information satisfies event salience requirements. For example, the event salience requirement may be set to satisfy at least some of left click, double click, and right click.

In addition, the task recording device, in response to determining that the button input information satisfies the event salience requirements, may set the button input information as information about the type of user manipulation, and set the coordinates of the cursor as the target object position, and call the first method using the information about the target object position.

Additionally, the task recording device may configure event information by setting the target object type returned from the first method, and add the configured event information to the event sequence.

The first method may be executed by a second process that is different from the first process of the RPA solution through inter-process communication method. For example, the first method may be a COM (Component Object Model)-based API provided by an operating system (OS) installed in the task recording device. Therefore, when this COM-based API is called by the RPA solution, the API will be executed by the operating system kernel process, not the RPA solution's process. The COM-based API may be any of the WIN32 APIs provided by Microsoft's Windows operating system.

However, due to the characteristics of the inter-process communication method, latency may occur when calling a function and receiving a return from the function. FIG. 7 shows that, reflecting this latency, the return of the COM-based API occurs at a time point (23-1) that has passed by the latency from the input point (23) of event 1, and the return of the COM-based API occurs at a time point (24-1) that has passed by the latency from the input point (24) of event 2, and the return of the COM-based API occurs at a time point (25-1) that has passed by the latency from the input point (25) of event 3.

However, event 3 is input (25) quickly after the input of event 2 (24), and an update (22) may occur, in which the window area of the notepad is reduced according to the input of event 3. In other words, the event holding time of event 2 is short, and when there is a screen update that involves the movement of an object due to the next event of event 2, the COMP-based API to obtain the target object type of event 2 will be executed on the screen (22) after the update due to the latency caused by the COM-based API call described above. As a result, the target object type of event 2 was menu 31, but due to the latency, the target object type of event 2 may be incorrectly identified as edit 32 (24-1a).

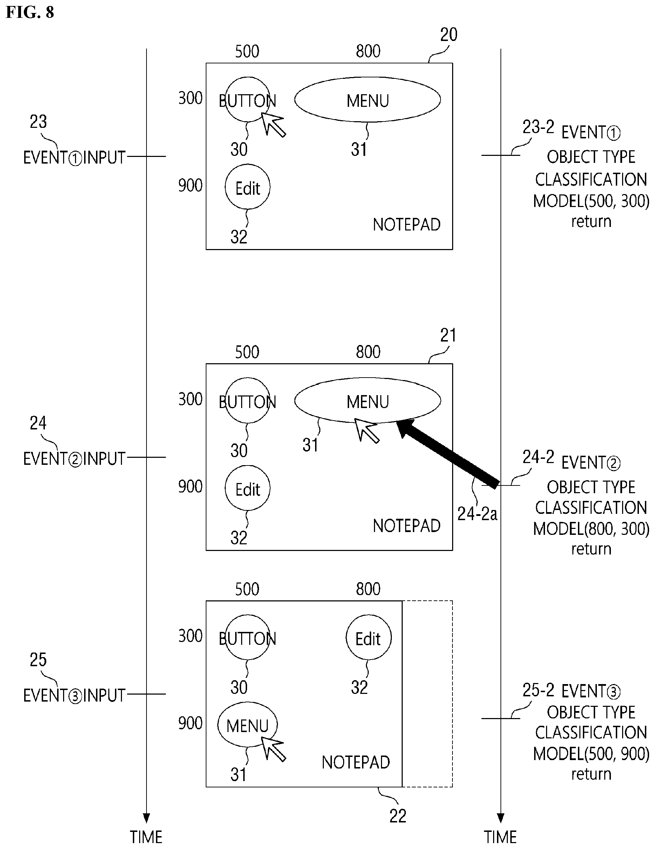

Referring to FIG. 8, a process in which a task recording device performs recording result correction will be described. As described above, the task recording device reproduces each event of the event sequence generated as a result of task recording one by one. FIG. 8 shows a situation where event 1, event 2, and event 3 are sequentially included in the event sequence. As shown in FIG. 8, the task recording device reproduces event 1 of clicking (500, 300) of the notepad.

In some embodiments, the task recording device may use the same first method used to obtain the type of the event target object when recording the task. At this time, unlike during task recording, the task recording device may wait without inputting the next event for reproduction of the next event until the first method returns. By waiting for this, the first method will return the correct type of object. As described above, the first method may be a COM-based API provided by an operating system (OS) installed on the task recording device.

In some other embodiments, the task recording device may obtain the object type corresponding to the position of the event target object using a second method that is different from the first method used to obtain the type of the event target object during task recording. The second method may be executed by an RPA solution process or a third process. The third process refers to a process other than the process of the RPA solution and the process of the operating system kernel. In other words, the task recording device may obtain the event target object type during the recording result correction process using a method different from the method of obtaining the event target object type during task recording.

Since the task recording device will execute recording result correction through the process of the RPA solution, the fact that the second method is executed through the process of the RPA solution means that latency is minimized in the process of calling the second method and returning the result value. FIG. 8 shows that the latency between the input of event 1 (23) and the call (23-2) of the second method to obtain the target object type of event 1 is minimized, so that the object type at the event input time (23, 24, 25) is returned correctly. In addition, FIG. 8 shows that, by calling the second method (24-2) according to the input (24) of event 2, object type identification (24-2a) targeting the notepad screen (21) upon input (24) of event 2 is performed.

The second method may determine the type of the object displayed at the target object position of the event using a previously generated object type classification model. In other words, the task recording device may determine the type of the object displayed at the target object position of the event on the display screen output by the operating system installed in the task recording device using an object type classification model.

In some embodiments, the object type classification model may be a machine-learned artificial neural network model that determines the type of object displayed at the target object position of the obtained event using an image of the display screen of a region of interest formed based on the obtained target object position. That is, the object type classification model may be supervised learning using learning data consisting of images of learning target objects labeled with the type of object. In other words, the object type classification model at this time may identify the correct object type by checking the display screen output by the operating system at the time of event input in a computer vision method.

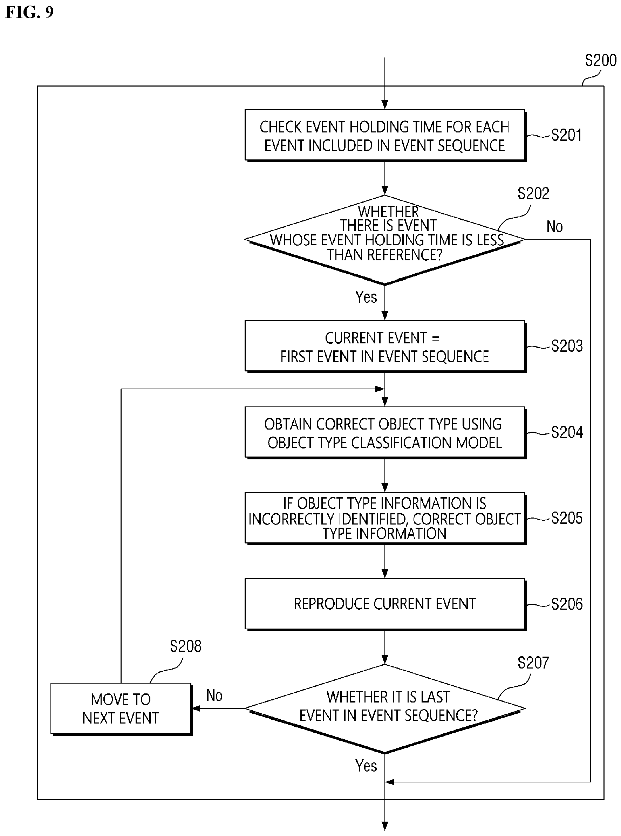

In some embodiments, the task recording device may selectively perform the check for whether there is an incorrectly identified target object type of each event according to the task recording result, or may perform the check partially only for some events of the event sequence. This will be described with reference to FIGS. 9 to 10.

According to the recording result correction operation (S200) described with reference to FIG. 9, the task recording device may check whether there are any target object types that are misidentified if there is even at least one event with an event holding time less than the reference value among each event included in the event sequence generated as a result of task recording.

To this end, the task recording device may check the event holding time for each event included in the event sequence (S201) and determine whether there is at least one event whose event holding time is less than the first reference value (S202). The first reference value may be a preset fixed time or a time calculated according to a predetermined rule for each task recording result.

For example, the task recording device may calculate the object density within the screen during task recording, and calculate the first reference value so that the higher the object density within the screen, the lower the first reference value. The higher the density of objects in the screen, the more likely it is that incorrect event target object types may be identified through quick user manipulation during fast task recording. This may be compensated for by dynamic first reference value calculation based on the density of objects in the screen. In other words, the task recording device may dynamically increase the possibility of performing recording result correction as the density of objects in the screen during task recording increases.

If there is even one event whose event holding time is less than the first reference value (S202), the task recording device may check whether there is an incorrectly identified target object type for all events included in the event sequence. First, the task recording device begins checking the target object type for each event in the event sequence by initializing the current event as the first event of the event sequence (S203).

The task recording device may obtain the exact object type of the target object of the current event using the object type classification model (S204). As described above, the object type classification model may be a machine-learned artificial neural network-based model that classifies the object type using screen image information of the region of interest corresponding to the position information of the target object.

The task recording device may determine whether the object type obtained in step S204 matches the object type information included in the information of the current event. If not, the task recording device may correct the object type information included in the information of the current event with the object type information obtained in step S204 (S205).

The task recording device may reproduce the current event using information on the current event, in which it confirmed that the object type of the target object is correct or the object type is corrected since it has been incorrectly identified (S206). Reproducing a current event means virtually inputting a user manipulation using information about the current event. Since the type of the target object is corrected in step S205, according to the reproduction of the current event (S206), the user's manipulation during task recording and the update of the user screen accordingly will accurately repeat the situation at the time of task recording.

Steps S204 to S206 will be performed sequentially and repeatedly until the last event of the event sequence (S207, S208).

The above has been described with reference to FIG. 9. As described above, the task recording device may check whether there is an incorrectly identified target object type for all events included in the event sequence if there is even one event whose event holding time is less than the first reference value. In some other embodiments, the task recording device may determine whether to perform recording result correction based on a representative value of the event holding time of all events included in the event sequence. The representative value may be either an average value or a mode value. That is, when it is determined that the representative value is below the third reference value, the task recording device may check whether there is an incorrectly identified target object type for all events included in the event sequence.

The third reference value may be a preset fixed time. In some embodiments, considering that it is not a cut-off reference value for some events but a reference value for representative values for all events, the third reference value may be a preset value higher than the first reference value.

The third reference value may be a time calculated according to a predetermined rule for each task recording result. For example, the task recording device may calculate the object density within the screen during task recording, and calculate the third reference value so that the higher the object density within the screen, the lower the third reference value.

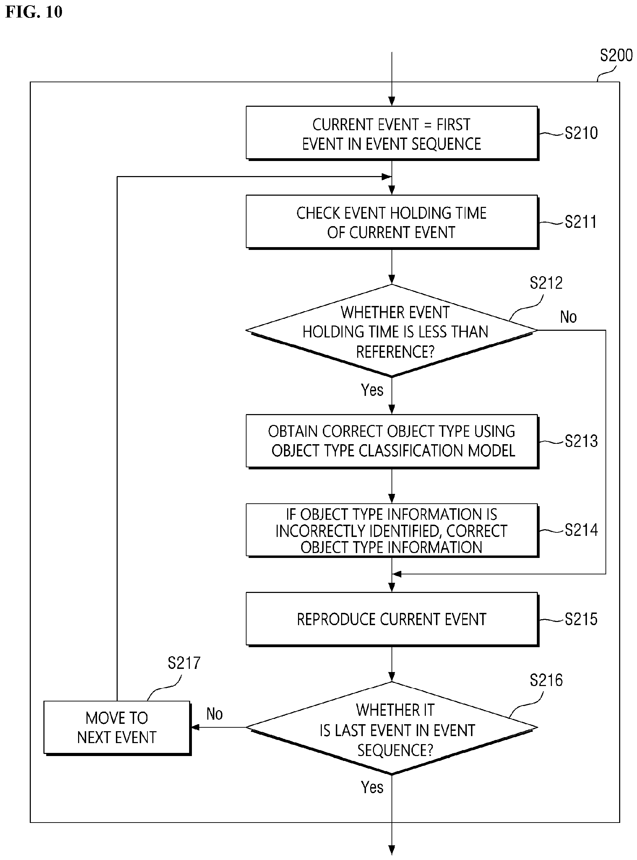

In some embodiments, unlike what is described with reference to FIG. 9, the task recording device may shorten the performance time of the recording result correction operation by checking whether there is an incorrectly identified target object type in only some events of the event sequence. This embodiment will be described with reference to FIG. 10. This embodiment may be implemented in situations where a reduction in performance time is required. That is, the embodiment described with reference to FIG. 10 may be performed when the total number of events included in the event sequence exceeds the preset fifth reference value.

First, the task recording device begins correcting the target object type for each event of the event sequence by initializing the current event as the first event of the event sequence (S210).

The task recording device checks the event holding time of the current event (S211) and determines whether the event holding time of the current event is less than the second reference value (S212). The task recording device may perform an operation to check whether the object type for the current event is correct only when the event holding time of the current event is less than the second reference value.

The task recording device may obtain the exact object type of the target object of the current event using the object type classification model (S213). As described above, the object type classification model may be a machine-learned artificial neural network-based model that classifies the object type using screen image information of the region of interest corresponding to the position information of the target object.

The task recording device determines whether the object type obtained in step S213 matches the object type information included in the information of the current event. If not, the task recording device may correct the object type information included in the information of the current event with the object type information obtained in step S213 (S214).

The task recording device may reproduce the current event using information on the current event, in which it is confirmed that the object type of the target object is correct or the object type is corrected since it has been incorrectly identified (S215).

The task recording device may reproduce the current event (S215) even when the event holding time of the current event is determined to be greater than or equal to the second reference value (S212) and the operation to check whether the object type for the current event is correct is not performed. In order to accurately perform recording result correction (S200), it is necessary to reproduce the same user operation during task recording. Because if the previous event is not input to the screen, the subsequent result may be different from that during task recording.

Steps S211 to S215 will be performed sequentially and repeatedly until the last event of the event sequence (S216, S217).

### Removal of noise events

Next, an operation (S300) related to removing a noise event will be described in more detail with reference to FIGS. 11 to 16B. First, a method for removing a noise event will be described overall with reference to FIG. 11. By performing noise event removal described below, it will be possible to prevent user manipulation that is included in the event sequence during the task recording process but corresponds to noise from lowering the accuracy and usability of the RPA scenario that is the result of task recording.

The task recording device extracts a noise candidate sequence from the event sequence (S301, S302). A noise candidate sequence is a sequence of a plurality of events in a temporally immediate sequential relationship that may be noise.

The task recording device may extract a first type of noise candidate sequence using a first method (S301) and extract a second type of noise candidate sequence using a second method (S302).

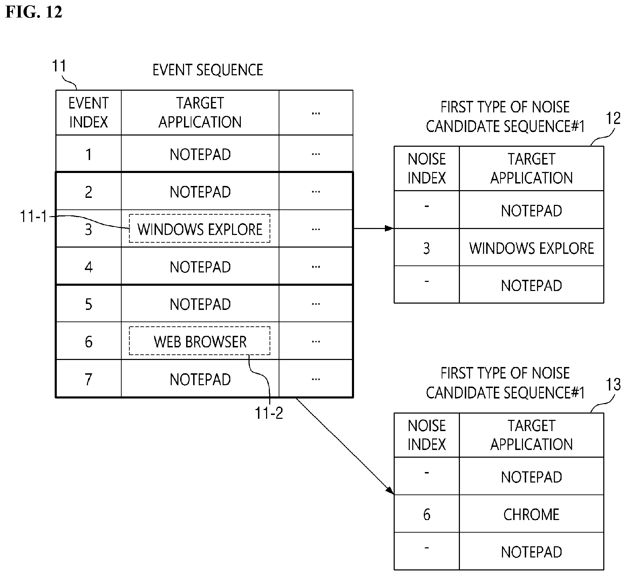

Referring to FIG. 12, the first type of noise candidate sequence extraction (S301) method will be described in more detail. The first type of noise candidate sequence may be extracted using identification information of the target application of each event. The target application of the event may be an application that has a target object of user manipulation.

The task recording device detects the case where the target application of an event appears only once and the target application of the next event changes to another application by scanning the entire event sequence 11.

For example, the target application of the event of index 3 shown in FIG. 12 is Windows Explorer 11-1, but the target applications for both the event immediately preceding it (index 2) and the event immediately after it (index 4) are not Windows Explorer. In this case, the task recording device may extract the first type of noise candidate sequence 12 consisting of events with indices 2 to 4.

In addition, the target application of the event of index 6 shown in FIG. 12 is the web browser 11-2, but the target applications of both the event immediately preceding it (index 5) and the event immediately after it (index 7) are not Windows Explorer. In this case, the task recording device may extract the first type of noise candidate sequence 13 consisting of events with indices 5 to 7.

In short, the task recording device may extract a noise candidate sequence in which a first event, a second event, and a third event are sequentially connected, and the application identification information of the first event and the application identification information of the second event are different from each other. At the same time, the application identification information of the second event and the application identification information of the third event are different from each other.

If the target application of an event appears only once, the event immediately before that event and the event immediately after it are grouped into the first type of noise candidate sequence, and as a result, the first type of noise candidate sequence will include the necessary information to determine whether the noise candidate sequence is actual noise through a noise removal-related operation described later. It will be understood that the first type of noise candidate sequence comprises three or more consecutive events.

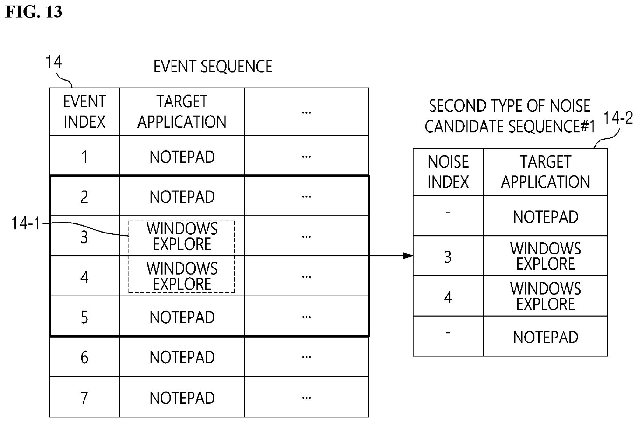

Referring to FIG. 13, the second type of noise candidate sequence extraction (S302) method will be described in more detail.

The task recording device obtains the target application frequency for the entire event sequence 14 in order to extract the second type of noise candidate sequence, thereby determining a low-frequency application whose frequency falls below the reference. The low-frequency application determined in this way may be understood as a low-frequency application that is the target of user manipulation of a task to be automated.

In some embodiments, the task recording device may determine one or more low-frequency applications to be applied to the event sequence 14 using analysis results for one or more additional event sequences other than the event sequence 14.

Additionally, in some other embodiments, the task recording device may receive a list of low-frequency applications from an external device related to the RPA service, such as the service server described with reference to FIG. 1.

The description will be made assuming that the Windows Explorer 14-1 is included in the above-mentioned low-frequency application. In this case, the task recording device will extract a second type of noise candidate sequence including one or more events whose target application is Windows Explorer among the events of the event sequence 14-1. The second type of noise candidate sequence is one, in which a first event, one or more second events, and a third event are sequentially connected, and the target application of the one or more second events may be understood as a low-frequency application. FIG. 13 shows a second type of noise candidate sequence 14-2 extracted from the event sequence 14.

In the second type of noise candidate sequence, the events immediately before and after the events whose target application is a low-frequency application are grouped together with the events whose target application is a low-frequency application. As a result, the second type of noise candidate sequence will contain necessary information to determine whether the noise candidate sequence is actual noise through noise removal-related operations to be described later.

It will be understood that the second type of noise candidate sequence also comprises three or more consecutive events, just like the first type of noise candidate sequence.

FIG. 11 will be referred again for explanation.

The task recording device may collect the first type of noise candidate sequence and the second type of noise candidate sequence to form a final noise candidate sequence list. Since the same noise candidate sequence may be repeatedly extracted into a first type of noise candidate sequence and a second type of noise candidate sequence, the task recording device may configure a final noise candidate sequence list after removing the duplicate noise candidate sequence.

The task recording device determines the final noise among the noise candidate sequences in the final noise candidate sequence list by referring to the plurality of previously stored task recording final result data (S303). The final result data of task recording may be stored in the RPA scenario storage 300, for example. The task recording device may query whether a partial sequence corresponding to the final result data of task recording exists for each noise candidate sequence in the final noise candidate sequence list.

For example, if an event sequence identical to the first noise candidate sequence in the final noise candidate sequence list is found in a plurality of partial sequences included in the task recording final result data, the task recording device determines the first noise candidate sequence to be not noise. If an event sequence identical to the first noise candidate sequence is not found in any partial sequence included in the final result data of task recording, the task recording device determines the first noise candidate sequence to be noise.

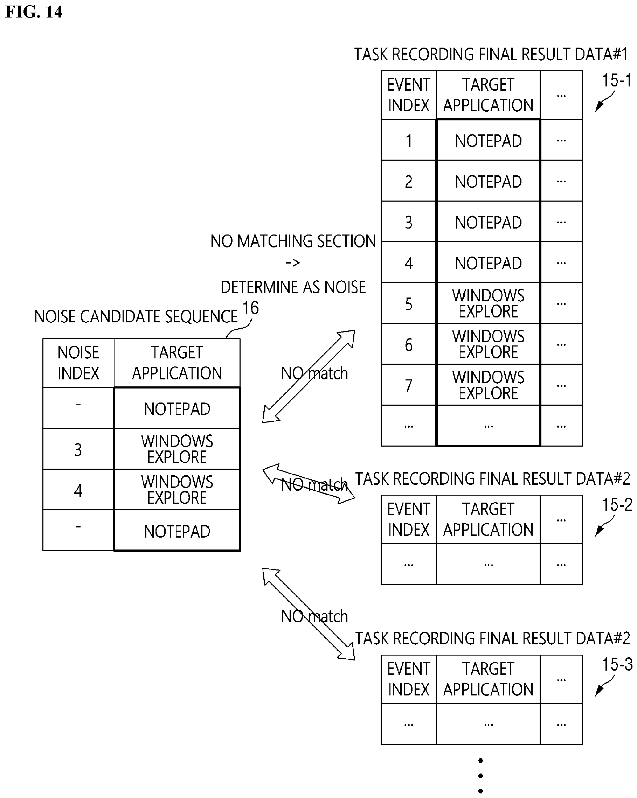

FIG. 14 shows an exemplary noise determination process of a task recording device. If the partial sequence corresponding to the noise candidate sequence 16 is not found in any of the task recording final result data 15-1, 15-2, and 15-3, the task recording device finally determines the noise candidate sequence 16 to be noise.

The task recording device removes one or more noise candidate sequences that are finally determined to be noise (S303) from the event sequence among the noise candidate sequences in the final noise candidate sequence list (S304).

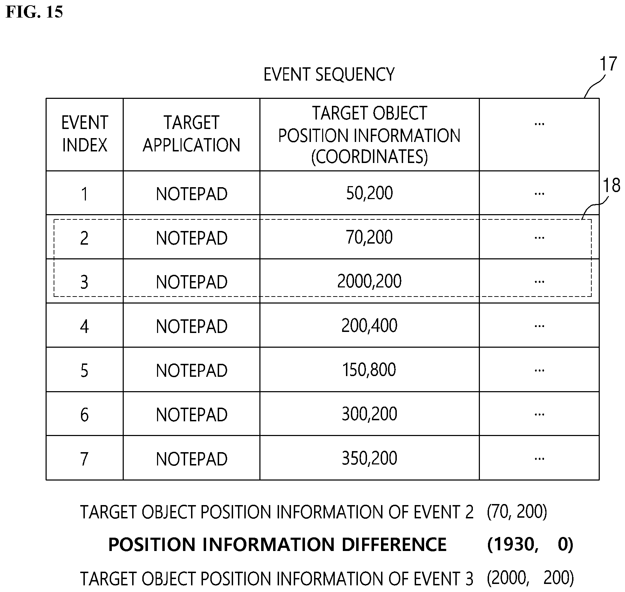

The task recording device may perform additional noise removal after the target application-based noise removal (S301 to S304) described above. For example, the task recording device may determine an event, in which a change in target object position information exceeding the fourth reference value occurs, as noise even though the target application is the same as the previous event and remove the noise. For example, the fourth reference value may be a value corresponding to the screen resolution provided by the operating system. This will be described in more detail with reference to FIG. 15.

As shown in FIG. 15, information about each event included in the event sequence 17 may include identification information of the target application and target object position information. The target object position information may be, for example, mouse cursor coordinates.

Assuming that the fourth reference value is set to (1920, 1080) corresponding to FULL HD resolution, the index 3 event included in the event sequence 17 may be noise. The target application of the index 3 event is a notepad, as the same as the previous event, the index 2 event. The difference in target object position information between the index 2 event and the index 3 event is (1930, 20), and this difference exceeds the X-axis limit of the fourth reference value. Accordingly, the task recording device may additionally determine the index 3 event as noise and remove the index 3 event from the event sequence 17.

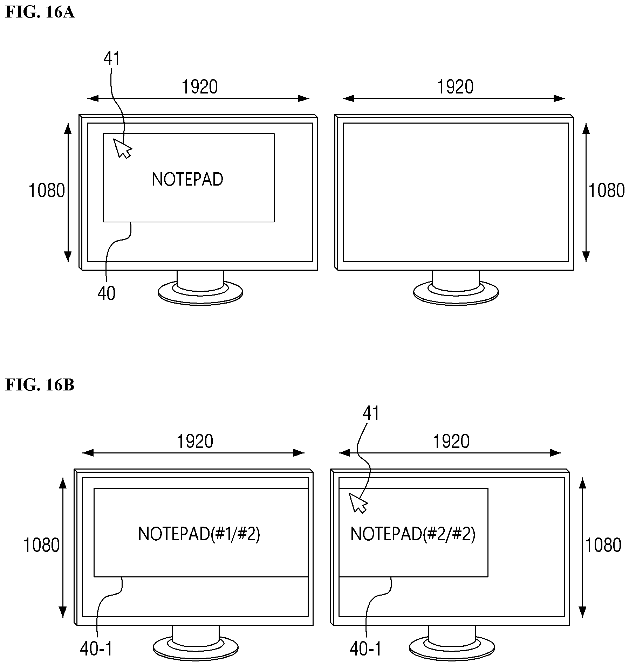

The reason why it is determined to be noise when an event having the same target application as the previous event has a target object position that exceeds the fourth reference value compared to the target object position of the previous event will be explained with reference to FIGS. 16A and 16B. In the case of users who use dual monitors as shown in FIGS. 16A and 16B, most of them forms the window of the target application 40 within one monitor as shown in FIG. 16A, but do not increase the windows 40-1 and 40-2 of the target application 41 to be sized to span multiple monitors as shown in FIG. 16B. In particular, it is more difficult to assume that task recording using an RPA solution is performed while the windows 40-1 and 40-2 of the target application 41 are increased in size to span multiple monitors, as shown in FIG. 16B.

Considering the above general usage pattern, when an event having the same target application as the previous event has a target object position that has a difference exceeding the fourth reference value compared to the target object position of the previous event, the task recording device will more surely remove the remaining noise events by determining the event as noise (S305).

Replace event sequences that match the activity pattern with activities

Next, an operation (S400) related to replacing event sequences matching an activity pattern with an activity will be described in more detail with reference to FIGS. 17 to 21.

So far, the post-processing procedures for correcting information about each event generated as a result of task recording of an RPA solution (correcting the target object type) or detecting and removing noise events has been described. In addition, the task recording device may discover an event sequence corresponding to the manipulation of a standardized user interface component in the results of RPA recording expressed as a basic type of user manipulation such as a keyboard manipulation or a mouse manipulation, and replace the discovered event sequence with "activity." As mentioned at the beginning of this disclosure, the manipulation of standardized user interface components will be referred to as 'activity.'

This will be explained with reference to FIG. 17. The task recording device may perform step S400 by sequentially traversing each event included in the event sequence.

The task recording device initializes the current event as the first event of the event sequence (S401). The task recording device searches for items in the pattern table corresponding to information on the current event (S402).

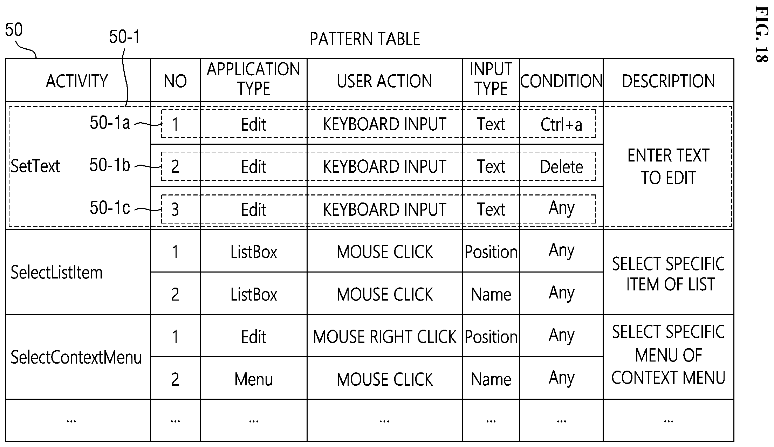

The pattern table 50 is data that defines the pattern of each activity, as shown in FIG. 18, and may define sequential event requirements necessary to satisfy the pattern of each activity. The event requirements may define the type of target object, the type of user manipulation (action), and the input value of the user manipulation.

For example, the SetText activity (50-1) defined in the pattern table (50) is an activity that deletes all previously entered content for an edit type object and inputs new text, may comprise a first event (50-1a) for keyboard inputting 'Ctrl + a' to an edit type object, a second event (50-1b) for keyboard inputting a delete key to an edit type object, and a third event (50-1c) for applying a keyboard input to an edit type object. The 'item' of the pattern table that the task recording device searches using information of the current event may be understood as referring to each event requirement (e.g., 50-1a, 50-1b, 50-1c) that constitutes each activity.

If there is no item in the pattern table corresponding to the information of the current event (S403), the task recording device may determine that pattern matching of the activity in the current event has failed, and initialize the information on the activity immediately preceding the event immediately following the current event (S409).

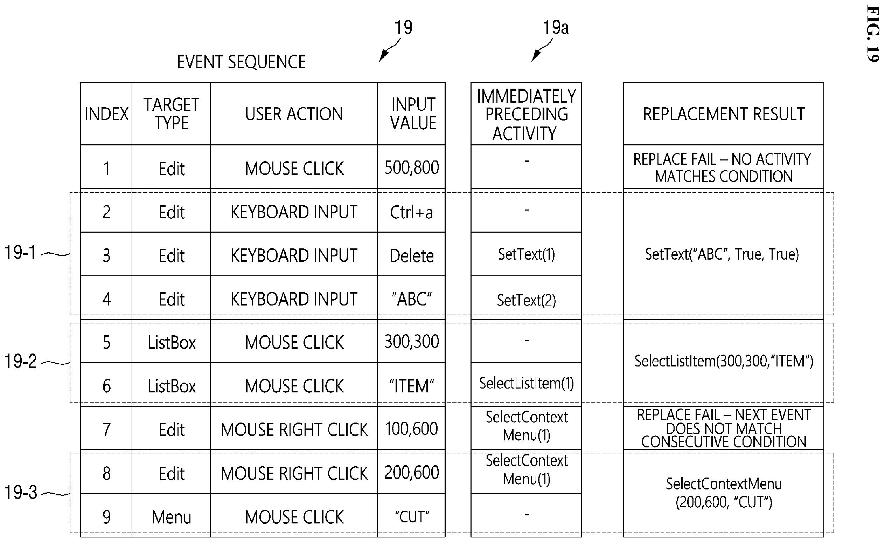

If an item of the pattern table corresponding to the information of the current event exists (S403), the task recording device queries the activity information immediately preceding the current event (S404), and determines whether the item of the pattern table corresponding to the information of the current event is the next item of the information of the queried immediately preceding activity (S405). If there is no activity information immediately preceding the current event, the task recording device may unconditionally determine 'Yes' in step S405. In addition, the immediately preceding activity information, as shown in FIG. 19, is information added to each event of the event sequence, and may be understood as information indicating which event of which activity the immediately preceding event was matched to.

If the item of the pattern table corresponding to the information of the current event is not the next item of the queried immediately preceding activity information, the task recording device may determine that the pattern matching of the activity has failed, and initialize the immediately preceding activity information of the event immediately following the current event (S409).

The task recording device, when the item of the pattern table corresponding to the information of the current event is the next item of the information of the queried immediately preceding activity and the item of the pattern table corresponding to the information of the current event is the last event of the activity (S406), may determine that the activity is complete, and replace all events included in the event sequence corresponding to the completed activity with the activity (S407). Additionally, the task recording device may initialize the information of immediately preceding activity of the event immediately following the current event (S409).

The task recording device, when the item of the pattern table corresponding to the information of the current event is the next item of the information of the queried immediately preceding activity, and the item of the pattern table corresponding to the information of the current event is not the last event of the activity (S406), may write an item of the pattern table corresponding to the information of the current event in the information of the immediately preceding activity of the event immediately following the current event (S408). Because of this, when processing the next event, the pattern matching situation up to the immediately preceding event may be identified.

The task recording device will sequentially perform processing for the current event (S402 to S409) for all events in the event sequence (S410, S411).

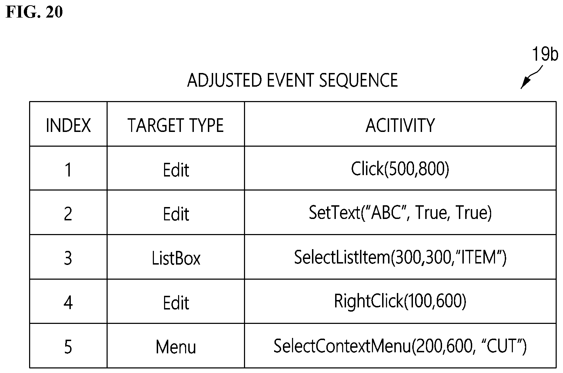

As shown in FIG. 19, when the task recording device sequentially processes each of the events of the event sequence 19 by the method of FIG. 18, among each activity defined in the pattern table 50 of FIG. 18, the index 2 to 4 event (19-1) corresponding to SetText, the index 5 to 6 event (19-2) corresponding to SelectListItem, and the index 8 to 9 event (19-3) corresponding to SelectContextMenu will be discovered, respectively. The discovered event sequences corresponding to an activity (19-1 to 19-3) will be replaced by the activity as shown in FIG. 20. FIG. 20 shows an adjusted event sequence 19b in which events that do not correspond to activities and activities, in which event sequences have been replaced, are mixed.

In some embodiments, the task recording device may store the adjusted event sequence shown in FIG. 20 as task recording final result data.

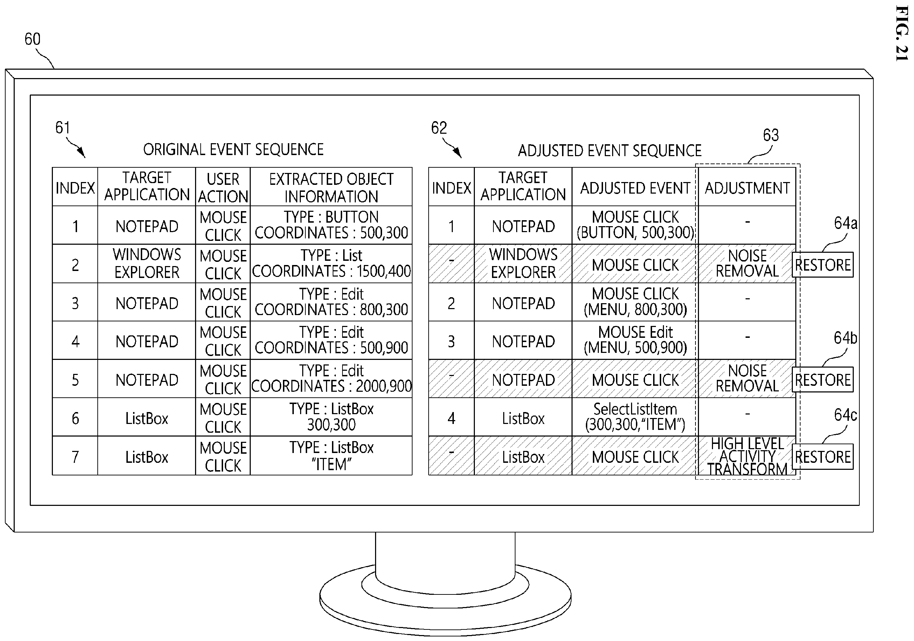

Meanwhile, before storing the adjusted event sequence shown in FIG. 20 as task recording final result data, the task recording device displays a comparison screen 60 as shown in FIG. 21 to allow the user to restore some of the corrections made in the post-processing process of the task recording result.

The comparison screen 60 may include the original event sequence 61 and the adjusted event sequence 62 in one screen, and the adjusted event sequence 62 may include information about the type of each post-processing correction as an adjustment 63. Additionally, graphic objects 64a, 64b, and 64c for inputting a recovery command for each correction may be displayed for each correction.

In some embodiments, the original event sequence 61 included in the comparison screen 60 may be an event sequence generated as a result of task recording by the RPA solution.

In some other embodiments, the original event sequence 61 included in the comparison screen 60 may be a corrected event sequence, in which incorrectly identified target object type information is corrected through the task recording correction operation described above.

The technical idea of the present disclosure described so far with reference to FIGS. 1 to 21 may be implemented as computer-readable code on a computer-readable medium. The computer-readable recording medium may be, for example, a removable recording medium (USB storage device, removable hard disk). The computer program recorded on the computer-readable recording medium may be transmitted to other computing device through a network such as the Internet, installed on the other computing device, and thus used on the other computing device.

### Computing system according to some embodiments of the present disclosure

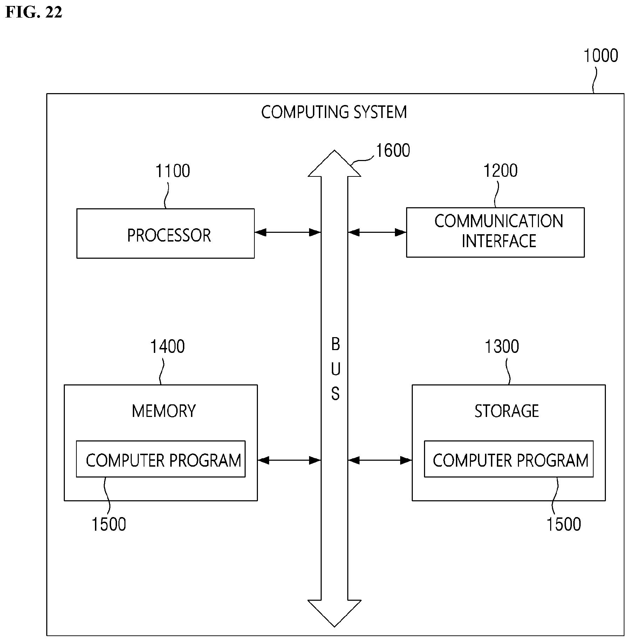

FIG. 22 is a hardware configuration view of an exemplary computing system 1000.

Referring to FIG. 22, the computing system 1000 may include at least one processor 1100, a bus 1600, a communication interface 1200, a memory 1400, which loads a computer program 1500 executed by the processor 1100, and a storage 1300, which stores the computer program 1500. FIG. 22 only illustrates components relevant to the embodiments of the present disclosure, and it is obvious that the computing system 1000 may further include other general components other than those illustrated in FIG. 22. In other words, the computing system 1000 may be configured to include various components other than those illustrated in FIG. 22 or may be configured without some of the components illustrated in FIG. 22. The computing system 1000 may be the task recording devices 200a and 200b described with reference to FIGS. 1 and 2.

The processor 1100 may control the overall operations of the components of the computing system 1000. The processor 1100 may be configured to include at least one of a central processing unit (CPU), a micro-processor unit (MPU), a micro controller unit (MCU), a graphic processing unit (GPU), a neural processing unit (NPU), and any other known form of processor in the field to which the present disclosure pertains. The processor 1100 may perform computations for at least one application or program for executing operations/methods according to some embodiments of the present disclosure. The computing system 1000 may be equipped with one or more processors.

The memory 1400 may store various data, commands, and/or information. The memory 1400 may load the computer program 1500 from the storage 1300 to execute the operations/methods according to some embodiments of the present disclosure. The memory 1400 may be implemented as a volatile memory such as a random-access memory (RAM), but the present disclosure is not limited thereto.

The bus 1600 may provide communication functionality among the components of the computing system 1000. The bus 1600 may be implemented in various forms, including an address bus, a data bus, and a control bus.

The communication interface 1200 may support both wired and wireless Internet communication for the computing system 1000. Additionally, the communication interface 1200 may also support various other communication methods. For this purpose, the communication interface 1200 may be configured to include a communication module that is well known in the field to which the present disclosure pertains.

The storage 1300 may temporarily store at least one computer program 1500. The storage 1300 may be configured to include a non-volatile memory (such as a read-only memory (ROM), an erasable programmable ROM (EPROM), an electrically erasable programmable ROM (EEPROM), or a flash memory), a hard disk, a removable disk, or any other well-known computer-readable medium in the field to which the present disclosure.

The computer program 1500 may include one or more instructions that, upon being loaded into the memory 1400, direct the processor 1100 to perform the operations/methods according to some embodiments of the present disclosure. In other words, by executing the loaded instructions, the processor 1100 may perform the operations/methods according to some embodiments of the present disclosure.

For example, the computer program 1500 may include an RPA solution that includes an RPA task recorder tool.

Further, for example, the computer program 1500 may include instructions to perform the following operations: recording a task using the RPA solution; and performing, in response to completion of the recording, recording result correction, wherein performing the recording result correction include: sequentially obtaining each event included in an event sequence generated as a result of the recording, wherein the event sequence includes information about each event included in the event sequence, and the information about each event includes information about a type of user manipulation, information about a target object position, and information about a target object type;
correcting the target object type of the obtained event using the target object position of the obtained event; reproducing the obtained event using the target object position of the obtained event and a corrected target object type of the obtained event; and
repeating the obtaining, the correcting, and the reproducing until an event included in the event sequence is exhausted.

In some embodiments, the computing system 1000 may refer to a virtual machine implemented based on cloud technology. For example, the computing system 1000 may be a virtual machine operating on one or more physical servers within a server farm. In this example, at least some of the components of the computing system 1000, i.e., the processor 1100, the memory 1400, and the storage 1300, may be implemented as virtual hardware, and the communication interface 1200 may be implemented as a virtual networking element such as a virtual switch.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing system via a network such as internet and installed in the other computing system, thereby being used in the other computing system.

Although operations are shown in a specific order in the drawings, it should not be understood that desired results may be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications may be made to the example embodiments without substantially departing from the principles of the present disclosure. Therefore, the disclosed example embodiments of the disclosure are used in a generic and descriptive sense only and not for purposes of limitation.

## Claims

1. A method for recording a task based on robotic process automation, RPA, performed by a computing system (1000) in which an RPA solution is installed, the method comprising:
recording a task using the RPA solution; and
performing, in response to completion of the recording, recording result correction,
wherein the performing the recording result correction comprises:
sequentially obtaining each event included in an event sequence (10, 11, 14, 17, 19) generated as a result of the recording, wherein the event sequence (10, 11, 14, 17, 19) comprises information about each event included in the event sequence (10, 11, 14, 17, 19), and the information about each event comprises information about a type of user manipulation, information about a target object position, and information about a target object type;
correcting the target object type of the obtained event using the target object position of the obtained event; wherein the correcting the target object type comprises: calling an object type return method that receives a target object position of the obtained event; waiting until the object type return method returns; and correcting the target object type of the obtained event to an object type returned from the object type return method;
reproducing the obtained event using the target object position of the obtained event and a corrected target object type of the obtained event; and
repeating the obtaining, the correcting, and the reproducing until an event included in the event sequence (10, 11, 14, 17, 19) is exhausted.

2. The method of claim 1, wherein the information about each event further comprises information about event holding time, which is interval between an occurrence time of the event and an occurrence time of an event immediately after the event,
wherein the performing the recording result correction comprises:
determining whether the event holding time of all events included in the event sequence (10, 11, 14, 17, 19) exceeds a first reference value; and
performing, when it is determined as a result of the determination that the event holding time of at least some events is less than the first reference value, the recording result correction.

3. The method of claim 1, wherein the information about each event further comprises information about event holding time, which is interval between an occurrence time of the event and an occurrence time of an event immediately after the event,
wherein the performing the recording result correction comprises:
determining whether the event holding time of each event included in the event sequence (10, 11, 14, 17, 19) exceeds a second reference value; and
performing the recording result correction only for an event, in which the event holding time is determined to be less than a second reference value.

4. The method of claim 1, wherein the information about each event further comprises information about event holding time, which is interval between an occurrence time of the event and an occurrence time of an event immediately after the event,
wherein the performing the recording result correction comprises:
calculating a representative value of the event holding time of all events included in the event sequence (10, 11, 14, 17, 19); and
performing, when it is determined that the representative value of the event holding time is less than a third reference value, the recording result correction.

5. The method of claim 1, wherein a target object type of each event included in the event sequence (10, 11, 14, 17, 19) is obtained as a result of calling a first method,
wherein the correcting the target object type comprises:
calling a second method that receives a target object position of the obtained event; and
correcting the target object type of the obtained event to an object type returned from the second method,
wherein the first method and the second method are different from each other.

6. The method of claim 5, wherein the first method is executed by a second process that is different from a first process of the RPA solution by an inter-process communication method,
wherein the second method is executed by the first process or a third process.

7. The method of claim 1, wherein the correcting the target object type comprises:
determining a type of an object displayed at the target object position of the obtained event on a display screen output by an operating system installed in the computing system (1000) using an object type classification model; and
correcting the target object type of the obtained event to the determined type.

8. The method of claim 1, wherein the performing the recording result correction comprises:
automatically performing, in response to completion of the recording, the recording result correction without a separate user command, and
the method further comprises:
storing final result data of the task recording generated using a corrected event sequence obtained according to the recording result correction.

9. The method of claim 8, wherein the storing the final result data comprises:
configuring a noise-removed event sequence by removing a noise event that is part of a plurality of events included in the corrected event sequence;
replacing a partial event sequence included in the noise-removed event sequence with an activity, wherein the partial event sequence comprises a plurality of consecutive events; and
storing the noise-removed event sequence reflecting a result of the replacing as the final result data.

10. The method of claim 9, wherein the storing the noise-removed event sequence reflecting the result of the replacing as the final result data comprises:
displaying an event sequence generated as a result of the recording and the noise-removed event sequence reflecting the result of the replacing on one screen, and displaying a comparison screen including a user interface for user manual adjustment of an event.

11. The method of claim 9, wherein the storing the noise-removed event sequence reflecting the result of the replacing as the final result data comprises:
displaying the corrected event sequence and the noise-removed event sequence reflecting the result of the replacing on one screen, and displaying a comparison screen including a user interface for user manual adjustment of an event.

12. The method of claim 1, wherein the recording comprises:
hooking a user's pointing device manipulation information and intercepting coordinates of a cursor using a callback function according to the hooking;
intercepting button input information of the pointing device using a callback function according to the hooking;
determining whether the button input information satisfies an event salience requirement;
configuring, in response to determining that the button input information satisfies the event salience requirement, event information by setting the button input information to information about the type of user manipulation, setting the coordinates of the cursor to information about the target object position, calling a first method using the information about the target object position and setting a target object type returned from the first method; and
adding information of the configured event to the event sequence (10, 11, 14, 17, 19).

13. A system for recording a task based on robotic process automation, RPA, the system comprising:
one or more processors; and
a memory configured to store one or more instructions,
wherein the one or more processors, by executing the stored one or more instructions, perform:
recording a task using an RPA solution; and
performing, in response to completion of the recording, recording result correction,
wherein the performing the recording result correction comprises:
sequentially obtaining each event included in an event sequence (10, 11, 14, 17, 19) generated as a result of the recording, wherein the event sequence (10, 11, 14, 17, 19) comprises information about each event included in the event sequence (10, 11, 14, 17, 19), and the information about each event comprises information about a type of user manipulation, information about a target object position, and information about a target object type;
correcting the target object type of the obtained event using the target object position of the obtained event; wherein the correcting the target object type comprises: calling an object type return method that receives a target object position of the obtained event; waiting until the object type return method returns; and correcting the target object type of the obtained event to an object type returned from the object type return method;
reproducing the obtained event using the target object position of the obtained event and a corrected target object type of the obtained event; and
repeating the obtaining, the correcting, and the reproducing until an event included in the event sequence (10, 11, 14, 17, 19) is exhausted.

14. A non-transitory computer-readable recording medium storing a computer program, which, when executed by one or more processors, causes the one or more processors to perform:
recording a task using an RPA solution; and
performing, in response to completion of the recording, recording result correction,
wherein the performing the recording result correction comprises:
sequentially obtaining each event included in an event sequence (10, 11, 14, 17, 19) generated as a result of the recording, wherein the event sequence (10, 11, 14, 17, 19) comprises information about each event included in the event sequence (10, 11, 14, 17, 19), and the information about each event comprises information about a type of user manipulation, information about a target object position, and information about a target object type;
correcting the target object type of the obtained event using the target object position of the obtained event; wherein the correcting the target object type comprises: calling an object type return method that receives a target object position of the obtained event; waiting until the object type return method returns; and correcting the target object type of the obtained event to an object type returned from the object type return method;
reproducing the obtained event using the target object position of the obtained event and a corrected target object type of the obtained event; and
repeating the obtaining, the correcting, and the reproducing until an event included in the event sequence (10, 11, 14, 17, 19) is exhausted.

## Patentansprüche

1. Verfahren zum Aufzeichnen einer Aufgabe basierend auf robotischer Prozessautomatisierung, RPA, durchgeführt durch ein Rechensystem (1000), in dem eine RPA-Lösung installiert ist, wobei das Verfahren Folgendes umfasst:
Aufzeichnen einer Aufgabe unter Verwendung der RPA-Lösung; und
Durchführen, als Reaktion auf den Abschluss des Aufzeichnens, einer Aufzeichnungsergebniskorrektur,
wobei das Durchführen der Aufzeichnungsergebniskorrektur Folgendes umfasst:
Sequenzielles Erhalten jedes Ereignisses, das in einer Ereignissequenz (10, 11, 14, 17, 19) enthalten ist, die als ein Ergebnis des Aufzeichnens erzeugt wird, wobei die Ereignissequenz (10, 11, 14, 17, 19) Informationen über jedes Ereignis umfasst, das in der Ereignissequenz (10, 11, 14, 17, 19) enthalten ist, und die Informationen über jedes Ereignis Informationen über einen Typ von Benutzermanipulation, Informationen über eine Zielobjektposition und Informationen über einen Zielobjekttyp umfassen;
Korrigieren des Zielobjekttyps des erhaltenen Ereignisses unter Verwendung der Zielobjektposition des erhaltenen Ereignisses; wobei das Korrigieren des Zielobjekttyps Folgendes umfasst: Aufrufen eines Objekttyprückgabeverfahrens, das eine Zielobjektposition des erhaltenen Ereignisses empfängt; Warten, bis das Objekttyprückgabeverfahren zurückkehrt; und Korrigieren des Zielobjekttyps des erhaltenen Ereignisses auf einen Objekttyp, der von dem Objekttyprückgabeverfahren zurückgegeben wird;
Wiedergeben des erhaltenen Ereignisses unter Verwendung der Zielobjektposition des erhaltenen Ereignisses und eines korrigierten Zielobjekttyps des erhaltenen Ereignisses; und
Wiederholen des Erhaltens, des Korrigierens und des Wiedergebens, bis ein Ereignis, das in der Ereignissequenz (10, 11, 14, 17, 19) enthalten ist, erschöpft ist.

2. Verfahren nach Anspruch 1, wobei die Informationen über jedes Ereignis ferner Informationen über die Ereignishaltezeit umfassen, die ein Intervall zwischen einer Auftrittszeit des Ereignisses und einer Auftrittszeit eines Ereignisses unmittelbar nach dem Ereignis ist,
wobei das Durchführen der Aufzeichnungsergebniskorrektur Folgendes umfasst:
Bestimmen, ob die Ereignishaltezeit aller in der Ereignissequenz (10, 11, 14, 17, 19) enthaltenen Ereignisse einen ersten Referenzwert überschreitet; und
Durchführen der Aufzeichnungsergebniskorrektur, wenn als Ergebnis der Bestimmung bestimmt wird, dass die Ereignishaltezeit von mindestens einigen Ereignissen kleiner als der erste Referenzwert ist.

3. Verfahren nach Anspruch 1, wobei die Informationen über jedes Ereignis ferner Informationen über die Ereignishaltezeit umfassen, die ein Intervall zwischen einer Auftrittszeit des Ereignisses und einer Auftrittszeit eines Ereignisses unmittelbar nach dem Ereignis ist,
wobei das Durchführen der Aufzeichnungsergebniskorrektur Folgendes umfasst:
Bestimmen, ob die Ereignishaltezeit jedes Ereignisses, das in der Ereignissequenz (10, 11, 14, 17, 19) enthalten ist, einen zweiten Referenzwert überschreitet; und
Durchführen der Aufzeichnungsergebniskorrektur nur für ein Ereignis, bei dem bestimmt wird, dass die Ereignishaltezeit kleiner als ein zweiter Referenzwert ist.

4. Verfahren nach Anspruch 1, wobei die Informationen über jedes Ereignis ferner Informationen über die Ereignishaltezeit umfassen, die ein Intervall zwischen einer Auftrittszeit des Ereignisses und einer Auftrittszeit eines Ereignisses unmittelbar nach dem Ereignis ist,
wobei das Durchführen der Aufzeichnungsergebniskorrektur Folgendes umfasst:
Berechnen eines repräsentativen Werts der Ereignishaltezeit aller Ereignisse, die in der Ereignissequenz (10, 11, 14, 17, 19) enthalten sind; und
Durchführen der Aufzeichnungsergebniskorrektur, wenn bestimmt wird, dass der repräsentative Wert der Ereignishaltezeit kleiner als ein dritter Referenzwert ist.

5. Verfahren nach Anspruch 1, wobei ein Zielobjekttyp jedes Ereignisses, das in der Ereignissequenz (10, 11, 14, 17, 19) enthalten ist, als Ergebnis des Aufrufs eines ersten Verfahrens erhalten wird,
wobei das Korrigieren des Zielobjekttyps Folgendes umfasst:
Aufrufen eines zweiten Verfahrens, das eine Zielobjektposition des erhaltenen Ereignisses empfängt; und
Korrigieren des Zielobjekttyps des erhaltenen Ereignisses auf einen Objekttyp, der von dem zweiten Verfahren zurückgegeben wurde,
wobei sich das erste Verfahren und das zweite Verfahren voneinander unterscheiden.

6. Verfahren nach Anspruch 5, wobei das erste Verfahren durch einen zweiten Prozess ausgeführt wird, der sich von einem ersten Prozess der RPA-Lösung durch ein Zwischenprozess-Kommunikationsverfahren unterscheidet, wobei das zweite Verfahren durch den ersten Prozess oder einen dritten Prozess ausgeführt wird.

7. Verfahren nach Anspruch 1, wobei das Korrigieren des Zielobjekttyps Folgendes umfasst:
Bestimmen eines Typs eines Objekts, das an der Zielobjektposition des erhaltenen Ereignisses auf einem Anzeigebildschirm angezeigt wird, der durch ein Betriebssystem ausgegeben wird, das in dem Rechensystem (1000) installiert ist, unter Verwendung eines Objekttypklassifizierungsmodells; und
Korrigieren des Zielobjekttyps des erhaltenen Ereignisses auf den bestimmten Typ.

8. Verfahren nach Anspruch 1, wobei das Durchführen der Aufzeichnungsergebniskorrektur Folgendes umfasst:
automatisches Durchführen, als Reaktion auf den Abschluss des Aufzeichnens, der Aufzeichnungsergebniskorrektur ohne einen separaten Benutzerbefehl, und
das Verfahren ferner umfasst:
Speichern von endgültigen Ergebnisdaten der Aufgabenaufzeichnung, die unter Verwendung einer korrigierten Ereignissequenz erzeugt werden, die gemäß der Aufzeichnungsergebniskorrektur erhalten wird.

9. Verfahren nach Anspruch 8, wobei das Speichern der endgültigen Ergebnisdaten Folgendes umfasst:
Konfigurieren einer rauschentfernten Ereignissequenz durch Entfernen eines Rauschereignisses, das Teil einer Vielzahl von Ereignissen ist, die in der korrigierten Ereignissequenz enthalten sind;
Ersetzen einer Teilereignissequenz, die in der rauschentfernten Ereignissequenz enthalten ist, durch eine Aktivität, wobei die Teilereignissequenz eine Vielzahl aufeinanderfolgender Ereignisse umfasst; und
Speichern der rauschentfernten Ereignissequenz, die ein Ergebnis des Ersetzens widerspiegelt, als die endgültigen Ergebnisdaten.

10. Verfahren nach Anspruch 9, wobei das Speichern der rauschentfernten Ereignissequenz, die das Ergebnis des Ersetzens widerspiegelt, als die endgültigen Ergebnisdaten Folgendes umfasst:
Anzeigen einer Ereignissequenz, die als ein Ergebnis des Aufzeichnens erzeugt wird, und der rauschentfernten Ereignissequenz, die das Ergebnis des Ersetzens widerspiegelt, auf einem Bildschirm und Anzeigen eines Vergleichsbildschirms, der eine Benutzerschnittstelle zur benutzermanuellen Anpassung eines Ereignisses enthält.

11. Verfahren nach Anspruch 9, wobei das Speichern der rauschentfernten Ereignissequenz, die das Ergebnis des Ersetzens als die endgültigen Ergebnisdaten widerspiegelt, Folgendes umfasst:
Anzeigen der korrigierten Ereignissequenz und der rauschentfernten Ereignissequenz, die das Ergebnis des Ersetzens widerspiegelt, auf einem Bildschirm und
Anzeigen eines Vergleichsbildschirms, der eine Benutzeroberfläche zur benutzermanuellen Anpassung eines Ereignisses enthält.

12. Verfahren nach Anspruch 1, wobei das Aufzeichnen Folgendes umfasst:
Abhaken der Manipulationsinformationen der Zeigevorrichtung eines Benutzers und Abfangen von Koordinaten eines Cursors unter Verwendung einer Rückruffunktion gemäß dem Abhaken;
Abfangen von Tasteneingabeinformationen der Zeigevorrichtung unter Verwendung einer Rückruffunktion gemäß dem Abhaken;
Bestimmen, ob die Tasteneingabeinformationen eine Ereignisprominenzanforderung erfüllen;
Konfigurieren, als Reaktion auf das Bestimmen, dass die Tasteneingabeinformationen die Ereignisprominenzanforderung erfüllen, von Ereignisinformationen durch Setzen der Tasteneingabeinformationen auf Informationen über den Typ der Benutzermanipulation, Setzen der Koordinaten des Cursors auf Informationen über die Zielobjektposition, Aufrufen eines ersten Verfahrens unter Verwendung der Informationen über die Zielobjektposition und Setzen eines Zielobjekttyps, der von dem ersten Verfahren zurückgegeben wird; und
Hinzufügen von Informationen des konfigurierten Ereignisses zu der Ereignissequenz (10, 11, 14, 17, 19).

13. System zum Aufzeichnen einer Aufgabe basierend auf robotischer Prozessautomatisierung, RPA, wobei das System Folgendes umfasst:
einen oder mehrere Prozessoren; und
einen Speicher, der dazu ausgelegt ist, eine oder mehrere Anweisungen zu speichern,
wobei der eine oder die mehreren Prozessoren durch Ausführen der gespeicherten einen oder mehreren Anweisungen Folgendes durchführen:
Aufzeichnen einer Aufgabe unter Verwendung einer RPA-Lösung; und
Durchführen, als Reaktion auf den Abschluss des Aufzeichnens, einer Aufzeichnungsergebniskorrektur,
wobei das Durchführen der Aufzeichnungsergebniskorrektur Folgendes umfasst:
Sequenzielles Erhalten jedes Ereignisses, das in einer Ereignissequenz (10, 11, 14, 17, 19) enthalten ist, die als ein Ergebnis des Aufzeichnens erzeugt wird, wobei die Ereignissequenz (10, 11, 14, 17, 19) Informationen über jedes Ereignis umfasst, das in der Ereignissequenz (10, 11, 14, 17, 19) enthalten ist, und die Informationen über jedes Ereignis Informationen über einen Typ von Benutzermanipulation, Informationen über eine Zielobjektposition und Informationen über einen Zielobjekttyp umfassen;
Korrigieren des Zielobjekttyps des erhaltenen Ereignisses unter Verwendung der Zielobjektposition des erhaltenen Ereignisses; wobei das Korrigieren des Zielobjekttyps Folgendes umfasst: Aufrufen eines Objekttyprückgabeverfahrens, das eine Zielobjektposition des erhaltenen Ereignisses empfängt; Warten, bis das Objekttyprückgabeverfahren zurückkehrt; und Korrigieren des Zielobjekttyps des erhaltenen Ereignisses auf einen Objekttyp, der von dem Objekttyprückgabeverfahren zurückgegeben wird;
Wiedergeben des erhaltenen Ereignisses unter Verwendung der Zielobjektposition des erhaltenen Ereignisses und eines korrigierten Zielobjekttyps des erhaltenen Ereignisses; und
Wiederholen des Erhaltens, des Korrigierens und des Wiedergebens, bis ein Ereignis, das in der Ereignissequenz (10, 11, 14, 17, 19) enthalten ist, erschöpft ist.

14. Nichtflüchtiges computerlesbares Aufzeichnungsmedium, das ein Computerprogramm speichert, das, wenn es durch einen oder mehrere Prozessoren ausgeführt wird, bewirkt, dass der eine oder die mehreren Prozessoren Folgendes durchführen:
Aufzeichnen einer Aufgabe unter Verwendung einer RPA-Lösung; und
Durchführen, als Reaktion auf den Abschluss des Aufzeichnens, einer Aufzeichnungsergebniskorrektur,
wobei das Durchführen der Aufzeichnungsergebniskorrektur Folgendes umfasst:
Sequenzielles Erhalten jedes Ereignisses, das in einer Ereignissequenz (10, 11, 14, 17, 19) enthalten ist, die als ein Ergebnis des Aufzeichnens erzeugt wird, wobei die Ereignissequenz (10, 11, 14, 17, 19) Informationen über jedes Ereignis umfasst, das in der Ereignissequenz (10, 11, 14, 17, 19) enthalten ist, und die Informationen über jedes Ereignis Informationen über einen Typ von Benutzermanipulation, Informationen über eine Zielobjektposition und Informationen über einen Zielobjekttyp umfassen;
Korrigieren des Zielobjekttyps des erhaltenen Ereignisses unter Verwendung der Zielobjektposition des erhaltenen Ereignisses; wobei das Korrigieren des Zielobjekttyps Folgendes umfasst: Aufrufen eines Objekttyprückgabeverfahrens, das eine Zielobjektposition des erhaltenen Ereignisses empfängt; Warten, bis das Objekttyprückgabeverfahren zurückkehrt; und Korrigieren des Zielobjekttyps des erhaltenen Ereignisses auf einen Objekttyp, der von dem Objekttyprückgabeverfahren zurückgegeben wird;
Wiedergeben des erhaltenen Ereignisses unter Verwendung der Zielobjektposition des erhaltenen Ereignisses und eines korrigierten Zielobjekttyps des erhaltenen Ereignisses; und
Wiederholen des Erhaltens, des Korrigierens und des Wiedergebens, bis ein Ereignis, das in der Ereignissequenz (10, 11, 14, 17, 19) enthalten ist, erschöpft ist.

## Revendications

1. Procédé d'enregistrement d'une tâche basée sur l'automatisation d'un processus robotique, RPA, effectuée par un système informatique (1000) où une solution RPA est installée, le procédé comprenant les étapes suivantes :
enregistrer une tâche à l'aide de la solution RPA ; et
effectuer, en réponse à l'achèvement de l'enregistrement, une correction du résultat de l'enregistrement,
où l'exécution de la correction du résultat de l'enregistrement comprend les étapes suivantes :
obtenir séquentiellement chaque événement inclus dans une séquence d'événements (10, 11, 14, 17, 19) générée à la suite de l'enregistrement, la séquence d'événements (10, 11, 14, 17, 19) comprenant des informations sur chaque événement inclus dans la séquence d'événements (10, 11, 14, 17, 19), et les informations sur chaque événement comprenant des informations sur un type de manipulation d'utilisateur, des informations sur la position d'un objet cible et des informations sur un type d'objet cible ;
corriger le type d'objet cible de l'événement obtenu à l'aide de la position de l'objet cible de l'événement obtenu ; où la correction du type d'objet cible comprend : l'appel d'un procédé de retour de type d'objet qui reçoit une position d'objet cible de l'événement obtenu ; l'attente jusqu'au retour du procédé de retour de type d'objet ; et la correction du type d'objet cible de l'événement obtenu en un type d'objet renvoyé par le procédé de retour de type d'objet ;
reproduire l'événement obtenu en utilisant la position de l'objet cible de l'événement obtenu et un type d'objet cible corrigé de l'événement obtenu ; et
répéter l'obtention, la correction et la reproduction jusqu'à ce qu'un événement compris dans la séquence d'événements (10, 11, 14, 17, 19) soit épuisé.

2. Procédé selon la revendication 1, dans lequel les informations sur chaque événement comprennent en outre des informations sur le temps de maintien de l'événement, qui est l'intervalle entre un temps d'occurrence de l'événement et un temps d'occurrence d'un événement qui se produit immédiatement après l'événement,
où l'exécution de la correction du résultat de l'enregistrement comprend les étapes suivantes :
déterminer si le temps de maintien d'événement de tous les événements compris dans la séquence d'événements (10, 11, 14, 17, 19) dépasse une première valeur de référence ; et
lorsqu'il est déterminé, à la suite de la détermination que le temps de maintien d'événement d'au moins certains événements est inférieur à la première valeur de référence, effectuer la correction du résultat d'enregistrement.

3. Procédé selon la revendication 1, dans lequel les informations sur chaque événement comprennent en outre des informations sur le temps de maintien de l'événement, qui est l'intervalle entre un temps d'occurrence de l'événement et un temps d'occurrence d'un événement qui se produit immédiatement après l'événement,
où l'exécution de la correction du résultat de l'enregistrement comprend les étapes suivantes :
déterminer si le temps de maintien d'événement de chaque événement compris dans la séquence d'événements (10, 11, 14, 17, 19) dépasse une deuxième valeur de référence ; et
effectuer la correction du résultat de l'enregistrement uniquement pour un événement pour lequel le temps de maintien d'événement est déterminé comme étant inférieur à une deuxième valeur de référence.

4. Procédé selon la revendication 1, dans lequel les informations sur chaque événement comprennent en outre des informations sur le temps de maintien de l'événement, qui est l'intervalle entre un temps d'occurrence de l'événement et un temps d'occurrence d'un événement qui se produit immédiatement après l'événement,
où l'exécution de la correction du résultat de l'enregistrement comprend les étapes suivantes :
calculer une valeur représentative du temps de maintien d'événement de tous les événements compris dans la séquence d'événements (10, 11, 14, 17, 19) ; et
lorsqu'il est déterminé que la valeur représentative du temps de maintien d'événement est inférieure à une troisième valeur de référence, effectuer la correction du résultat de l'enregistrement.

5. Procédé selon la revendication 1, dans lequel un type d'objet cible de chaque événement inclus dans la séquence d'événements (10, 11, 14, 17, 19) est obtenu à la suite de l'appel d'un premier procédé,
où la correction du type d'objet cible comprend les étapes suivantes :
appeler un deuxième procédé qui reçoit une position d'objet cible de l'événement obtenu ; et
corriger le type d'objet cible de l'événement obtenu en un type d'objet renvoyé par le deuxième procédé,
où le premier procédé et le deuxième procédé sont différents l'un de l'autre.

6. Procédé selon la revendication 5, dans lequel le premier procédé est exécuté par un deuxième processus qui est différent d'un premier processus de la solution RPA par un procédé de communication inter-processus,
où le deuxième procédé est exécuté par le premier processus ou un troisième processus.

7. Procédé selon la revendication 1, dans lequel la correction du type d'objet cible comprend les étapes suivantes :
déterminer le type d'un objet affiché à la position d'objet cible de l'événement obtenu sur un écran d'affichage produit par un système d'exploitation installé dans le système informatique (1000) à l'aide d'un modèle de classification de type d'objet ; et
corriger le type d'objet cible de l'événement obtenu en type déterminé.

8. Procédé selon la revendication 1, dans lequel l'exécution de la correction du résultat d'enregistrement comprend :
l'exécution automatique, en réponse à l'achèvement de l'enregistrement, de la correction du résultat de l'enregistrement sans commande distincte de l'utilisateur, et
le procédé comprenant en outre l'étape suivante :
stocker les données de résultat final de l'enregistrement de tâche générées à l'aide d'une séquence d'événements corrigée obtenue en fonction de la correction du résultat de l'enregistrement.

9. Procédé selon la revendication 8, dans lequel le stockage des données du résultat final comprend les étapes suivantes :
configurer une séquence d'événements sans bruit en supprimant un événement de bruit qui fait partie d'une pluralité d'événements inclus dans la séquence d'événements corrigée ;
remplacer une séquence d'événements partielle incluse dans la séquence d'événements sans bruit par une activité, la séquence d'événements partielle comprenant une pluralité d'événements consécutifs ; et
stocker la séquence d'événements sans bruit reflétant le résultat du remplacement en tant que données de résultat final.

10. Procédé selon la revendication 9, dans lequel le stockage de la séquence d'événements sans bruit reflétant le résultat du remplacement en tant que données de résultat final comprend :
l'affichage d'une séquence d'événements générée à la suite de l'enregistrement et de la séquence d'événements sans bruit reflétant le résultat du remplacement sur un écran, et l'affichage d'un écran de comparaison comprenant une interface utilisateur pour l'ajustement manuel d'un événement par l'utilisateur.

11. Procédé selon la revendication 9, dans lequel le stockage de la séquence d'événements sans bruit reflétant le résultat du remplacement en tant que données de résultat final comprend :
l'affichage de la séquence d'événements corrigée et de la séquence d'événements sans bruit reflétant le résultat du remplacement sur un écran, et l'affichage d'un écran de comparaison comprenant une interface utilisateur pour l'ajustement manuel d'un événement par l'utilisateur.

12. Procédé selon la revendication 1, dans lequel l'enregistrement comprend les étapes suivantes :
accrocher des informations de manipulation du dispositif de pointage de l'utilisateur et intercepter les coordonnées d'un curseur à l'aide d'une fonction de rappel en fonction de l'accrochage ;
intercepter des informations d'entrée du bouton du dispositif de pointage à l'aide d'une fonction de rappel conformément à l'accrochage ;
déterminer si les informations d'entrée du bouton satisfont une exigence de saillance d'événement ;
configurer, en réponse à la détermination que les informations d'entrée de bouton satisfont l'exigence de saillance d'événement, les informations d'événement en configurant les informations d'entrée de bouton aux informations sur le type de manipulation de l'utilisateur, en configurant les coordonnées du curseur aux informations sur la position de l'objet cible, en appelant un premier procédé à l'aide des informations sur la position de l'objet cible et en configurant un type d'objet cible retourné par le premier procédé ; et
ajouter les informations de l'événement configuré à la séquence d'événements (10, 11, 14, 17, 19).

13. Système d'enregistrement d'une tâche basée sur l'automatisation d'un processus robotique, RPA, le système comprenant :
un ou plusieurs processeurs ; et
une mémoire configurée pour stocker une ou plusieurs instructions,
où les un ou plusieurs processeurs, en exécutant les une ou plusieurs instructions stockées, effectuent les étapes suivantes :
enregistrer une tâche à l'aide d'une solution RPA ; et
effectuer, en réponse à l'achèvement de l'enregistrement, une correction du résultat de l'enregistrement,
où l'exécution de la correction du résultat de l'enregistrement comprend les étapes suivantes :
obtenir séquentiellement chaque événement inclus dans une séquence d'événements (10, 11, 14, 17, 19) générée à la suite de l'enregistrement, la séquence d'événements (10, 11, 14, 17, 19) comprenant des informations sur chaque événement inclus dans la séquence d'événements (10, 11, 14, 17, 19), et les informations sur chaque événement comprenant des informations sur un type de manipulation d'utilisateur, des informations sur la position d'un objet cible et des informations sur un type d'objet cible ;
corriger le type d'objet cible de l'événement obtenu à l'aide de la position de l'objet cible de l'événement obtenu ; où la correction du type d'objet cible comprend : l'appel d'un procédé de retour de type d'objet qui reçoit une position d'objet cible de l'événement obtenu ; l'attente jusqu'au retour du procédé de retour de type d'objet ; et la correction du type d'objet cible de l'événement obtenu en un type d'objet renvoyé par le procédé de retour de type d'objet ;
reproduire l'événement obtenu en utilisant la position de l'objet cible de l'événement obtenu et un type d'objet cible corrigé de l'événement obtenu ; et
répéter l'obtention, la correction et la reproduction jusqu'à ce qu'un événement compris dans la séquence d'événements (10, 11, 14, 17, 19) soit épuisé.

14. Support d'enregistrement non transitoire lisible par ordinateur stockant un programme informatique qui, lorsqu'il est exécuté par un ou plusieurs processeurs, amène les un ou plusieurs processeurs à exécuter les étapes suivantes :
enregistrer une tâche à l'aide d'une solution RPA ; et
effectuer, en réponse à l'achèvement de l'enregistrement, une correction du résultat de l'enregistrement,
où l'exécution de la correction du résultat de l'enregistrement comprend les étapes suivantes :
obtenir séquentiellement chaque événement inclus dans une séquence d'événements (10, 11, 14, 17, 19) générée à la suite de l'enregistrement, la séquence d'événements (10, 11, 14, 17, 19) comprenant des informations sur chaque événement inclus dans la séquence d'événements (10, 11, 14, 17, 19), et les informations sur chaque événement comprenant des informations sur un type de manipulation d'utilisateur, des informations sur la position d'un objet cible et des informations sur un type d'objet cible ;
corriger le type d'objet cible de l'événement obtenu à l'aide de la position de l'objet cible de l'événement obtenu ; où la correction du type d'objet cible comprend : l'appel d'un procédé de retour de type d'objet qui reçoit une position d'objet cible de l'événement obtenu ; l'attente jusqu'au retour du procédé de retour de type d'objet ; et la correction du type d'objet cible de l'événement obtenu en un type d'objet renvoyé par le procédé de retour de type d'objet ;
reproduire l'événement obtenu en utilisant la position de l'objet cible de l'événement obtenu et un type d'objet cible corrigé de l'événement obtenu ; et
répéter l'obtention, la correction et la reproduction jusqu'à ce qu'un événement compris dans la séquence d'événements (10, 11, 14, 17, 19) soit épuisé.
